(19) **Europäisches Patentamt / European Patent Office / Office européen des brevets**

(11) **EP 4 639 358 B1**

(12) **EUROPEAN PATENT SPECIFICATION**

(45) Date of publication and mention
of the grant of the patent:
**15.07.2026  Bulletin 2026/29**

(21) Application number: **23834095.4**

(22) Date of filing: **18.12.2023**

(51) International Patent Classification (IPC):
*G06F 16/22* (2019.01)      *G06F 16/9537* (2019.01)
*G06N 3/044* (2023.01)      *G06N 3/02* (2006.01)
*G06N 3/04* (2023.01)       *G06N 3/0442* (2023.01)
*G06N 3/048* (2023.01)      *G06N 3/08* (2023.01)
*G06N 3/084* (2023.01)      *G06N 7/01* (2023.01)
*H04W 4/02* (2018.01)       *H04W 4/021* (2018.01)
*H04W 4/029* (2018.01)

(52) Cooperative Patent Classification (CPC):
**H04L 67/52; G06F 21/6245; G06N 3/0442;
G06N 3/048; G06N 3/084; G06Q 10/04;
G06Q 10/083; G06Q 10/109; H04W 12/02;
H04W 12/63;** G06N 3/096

(86) International application number:
**PCT/EP2023/086468**

(87) International publication number:
**WO 2024/133150 (27.06.2024 Gazette 2024/26)**

(54) **REDUCING ENERGY CONSUMPTION FOR THE DELIVERY OF A SERVICE TO A RECIPIENT AT A POSTAL ADDRESS**

VERFAHREN ZUR VORHERSAGE VON KERNZEITEN DER ANWESENHEIT

PROCÉDÉ DE PRÉDICTION DE TEMPS CENTRAUX DE PRÉSENCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.12.2022  EP 22214528**

(43) Date of publication of application:
**29.10.2025  Bulletin 2025/44**

(73) Proprietor: **Green Convenience GmbH
60327 Frankfurt am Main (DE)**

(72) Inventors:
• **DAGTEKIN, Deniz
  60549 Frankfurt am Main (DE)**
• **CHOUCHANE, Amine
  60549 Frankfurt am Main (DE)**
• **DAUTH, Benjamin
  60549 Frankfurt am Main (DE)**

(74) Representative: **Köllner, Malte
Köllner.ip Patentanwaltskanzlei
Vogelweidstraße 8
60596 Frankfurt am Main (DE)**

(56) References cited:
**US-A1- 2019 260 730    US-A1- 2020 349 510**

**Description**

FIELD OF THE INVENTION

The present invention relates to determining core times of presence of at least one recipient of a service at a postal address. Also, the present invention relates to a data processing system comprising means for carrying out the above-mentioned methods, as well as to a computer program product and to a computer-readable storage medium comprising instructions which, when executed by a computer, cause the computer to carry out the above-mentioned methods.

BACKGROUND OF THE INVENTION

Different approaches are known for predicting the presence or absence of a person at a specific location during a particular time frame. The result can be usefully notified to a terminal of a home-delivery company for optimizing the delivery time of the products and avoiding unnecessary trips, which cause both an economic and an environmental damage.

DESCRIPTION OF RELATED ART

For example, the prediction can be carried out on the basis of data representing an amount of power consumption in a predetermined place (e.g., a home, a workplace, or the like). However, this approach lacks functionality and reliability. As a matter of fact, following the results of a dedicated study, a quarter of the households tested had to be removed from the study because their energy consumption did not vary enough to create a profile. Energy use does not necessarily reflect consumer activity or presence, and automatic appliances, a running washing machine, or a heater steered by a thermostat could skew the results. Participants had to fill an extensive questionnaire about their private life, and energy experts were necessary to make conclusions. In addition, obtaining consumer energy use data is not easy, and not in real-time unless consumers have smart homes. Consumers are not used to sharing energy data. Despite the innovative research direction, these problems prevent practical use. In addition, the study did not use any data protection or security technology.

Another approach utilizes data shared by the users when visiting particular locations to determine popular times and visit duration. In particular, it is possible to determine how active a location is at a particular moment compared to the usual level of activity. In addition, it is possible to determine how much time a user typically spends at a location by estimation based on patterns of user visits over the past weeks. In this approach, results are generated for public locations or stores. Precise users' locations are collected and stored, which can be retrieved if a hacker manages to have access to the data. In other words, sensitive information, such as which streets the user went along, which shops he visited, where the user lives, and the user's habits as well as preferences can be used illegally.

According to another approach, the user's location is predicted based on mobile location data. In a first step, a user's locations of interest are identified through density-based clustering. Next, the sematic (home or work) of the user's locations of interest are discovered, based on temporal assumptions and, finally, the future locations are predicted with a decision tree model that is trained in each user's historical location data. This approach only produces a weekly schedule and does not provide updates or optimizations in the further course during, for example, a delivery. In addition, this approach does not measure the distances of the user to the delivery address and does not remove time windows when attendance cannot be made on time from the schedule. Aside from the user's allowance of the use of their location in the respective app, there is no privacy or security technology used in this approach, such as encryption or a verification mechanism, and the data processing is linked to real map data (longitude and latitude of a location).

The publication US 2020/0349510 A1 discloses a method for online transport logistics management. This includes using a simple frontend on smartphone devices in conjunction with an application server. A functionality for predicting the location of a recipient for a delivery is provided. This functionality relies on GPS tracking and consequently collects significant personal data. Anonymising or otherwise adequately protecting this data is, however, not considered.

The publication US 2019/0260730 A1 discloses methods and systems for authenticating users based on contextual data in a privacy preserving way. This includes a hashing technique designed to preserve the confidentiality of location data. However, this technique does not allow for distance measurements, which makes it unsuitable for predicting a user's presence at any given location.

OBJECT OF THE INVENTION

It is, therefore, an object of the present invention to address or at least alleviate some of the above-mentioned problems and to reduce energy consumption for the delivery of a service to a recipient.

BRIEF SUMMARY OF THE INVENTION

This aim is achieved by the inventions as claimed in the independent claims. Advantageous embodiments are described in the dependent claims.

The object of the invention is achieved by a method. In what follows, individual steps of a method will be described in more detail. The steps do not necessarily have to be performed in the order given in the text. In addition, further steps not explicitly stated may be part of the method.

We propose a method for reducing energy consumption for the delivery of a service to a recipient of the service at a postal address or geographical location.

Typically, the recipient will be a natural person. However, it is also imaginable, that the recipient is a robot or a machine requiring refill and or replacement of spare parts.

The postal address is typically the home address or place of work of the natural person. This could consist of the typical pieces of information like state, city, ZIP code, street with house number. For high-rises, it could also include the floor number, suite number or room number. However, e.g. in remote places where there is no postal address, a geographical location given in geographical coordinates in some reference system could also serve for indicating the place where the service is to be delivered.

The service in most practical cases will be the delivery of a parcel or good. But it could also be a service of a craftsman, mechanic, a nurse or the like. In general terms, the service is an action that requires the presence of at least two persons at a postal address or geographical location. In an even more generalised manner, the service could be delivered by a robot or drone, thus requiring only the robot or drone and the natural person or machine as recipient to be present at the postal address or geographical location at the same time.

The method requires a number of steps. A mobile device of the recipient sends at least an identification code corresponding to the recipient and data representing a location of the mobile device in regular temporal intervals to a time prediction system.

Typically, the mobile device would have with an activated location sensor. The activated location sensor would typically be a built-in GPS sensor. It could, however, also be any other means for determining the location of the mobile device. For instance, the location of the mobile device could be determined by triangulation with different base stations of a mobile network. Equally, the mobile device might use Wi-Fi or Bluetooth to determine its location.

Typically, an app would be running on the mobile device of the recipient having the authorisation to send these data to the time prediction system. It would do so once it has been installed on the mobile device of the recipient. It would do so in regular intervals, e.g. every quarter of an hour, every minute or the like. Alternatively, it could send updates more regularly, if the mobile device would be moving and less regularly if the mobile device were stationary.

The time prediction system receives and stores the data representing the location and stores them together with the identification code of the recipient and a time stamp.

An entity is receiving an order to deliver the service to the recipient at the postal address or geographical location. This entity could be the routing system of a delivery service as well as the persons delivering the parcels themselves. It could also be the scheduling system of a nursery service, an online shop or the like.

The order includes at least the postal address or geographical location and data identifying the recipient. The data identifying the recipient could e.g. be the recipient's name or a customer number in an online shop.

The entity further receives the identification code of the recipient or calculates the identification code of the recipient based on information about the recipient. This identification code can either be generated by the app on the mobile device of the recipient, or by the delivery service or routing system which then might be transmitted to the app on the mobile device of the recipient. The identification code could also be generated by an online shop, where the recipient bought a certain product. If a certain algorithm is used for calculating the identification code, the different players like the entity could also calculate the identification code based on information about the recipient they have.

After receiving the service order, the entity sends a request to the time prediction system for providing to the entity predicted core times of presence of the recipient at the postal address geographical location. The request contains at least the postal address or geographical location and the identification code corresponding to the recipient. It might furthermore contain the earliest time and date feasible for the entity for servicing the recipient at the postal address or geographical location.

After receiving the request, the time prediction system provides the requested predicted core times of presence of the recipient to the entity, thereby putting the entity in a position to deliver the service to the recipient at the postal address or geographical location at the predicted core times of presence of the recipient at the postal address. Typically, the time prediction system would return the predicted core times of presence for the next couple of days, for example for the next 2 to 7 days, preferably for the next 2 to 5 days, most preferably for the next 2 to 3 days. For example, in a home delivery use case, these predictions can furthermore be limited to times of preferred shipment acceptance, such as Monday to Saturday 08:00-21:00.

If the request contains the earliest time and date feasible for the entity for servicing the recipient at the postal address or geographical location, the provided predicted core times of presence could start with this earliest time and date. Otherwise, the provided predicted core times would start e.g. with the moment of receipt of the request.

This approach not only prevents unnecessary delivery trips to a large extent, saving up to 45% of the average time and energy spent on delivery trips.

By increasing the probability of the delivery agent and the recipient meeting each other at the postal address or geographical location, the proposed method also largely avoids that the customer is waiting in vain for the delivery of the service. Experience shows that this is a constellation that causes significant customer dissatisfaction.

Concentrating only on the time prediction system, the proposed method would present itself from the perspective of the time prediction system in the following way. The method for calculating predicted core times of presence of a recipient of a service at a postal address or geographical location would involve the following steps as seen from the time prediction system.

The time prediction system receives in regular temporal intervals from a mobile device of the recipient at least an identification code corresponding to the recipient and data representing a location of the mobile device.

The time prediction system stores the data representing the location together with the identification code of the recipient and a time stamp.

If the delivery of the service is required from an entity, the time prediction system receives a request for providing predicted core times of presence of the recipient at the postal address or geographical location from that entity.

The request contains at least the postal address or geographical location, and the identification code of the recipient. It could furthermore contain the earliest time and date feasible for the entity for servicing the recipient at the postal address or geographical location.

After receiving the request, the time prediction system provides the requested predicted core times of presence to the entity, thereby putting the entity in a position to deliver the service to the recipient at the postal address at the predicted core times of presence of the recipient at the postal address.

To this end, the invention requires a time prediction system comprising means for carrying out the just described method.

Furthermore, the object of the invention can be achieved by a computer program comprising instructions which, when the program is executed by a computer, cause the computer to carry out the just described method.

To this end, a computer-readable medium having stored thereon the computer program of the immediately preceding claim could be offered on the market.

Correspondingly, the invention requires a computer program for a mobile device of a recipient of a service, the program sending at least an identification code corresponding to the recipient and data representing a location of the mobile device in regular temporal intervals to a time prediction system performing the method performed by the time prediction system.

When viewed from the perspective of an entity involved in delivery of a service to a recipient at a postal address or geographical location, the proposed method would include the following steps: The entity receives an order to deliver the service to the recipient at the postal address. This order would include at least the postal address or geographical location and the recipient's name.

The entity would further receive an identification code of the recipient or would calculate the identification code of the recipient based on information about the recipient.

After receiving the service order, the entity sends a request to the above described time prediction system for receiving from the time prediction system the predicted core times of presence of the recipient at the postal address or geographical location. The request would contain at least the postal address or geographical location itself and the identification code corresponding to the recipient. It could furthermore contain the earliest time and date feasible for the entity for servicing the recipient at the postal address or geographical location.

After sending the request, the entity receives from the time prediction system the requested predicted core times of presence of the recipient at the postal address or geographical location, thereby putting the entity in a position to deliver the service to the recipient at the postal address at the predicted core times of presence of the recipient at the postal address.

Preferably, the data representing the location of the mobile device of the recipient are transformed on the mobile device of the recipient before sending them to the time prediction system in such a way, that the location of the mobile device cannot be localized on the earth by the time prediction system. However, the transformed location data allow the time prediction system to measure distances between different locations of the mobile device within a predefined distance range. Correspondingly, the postal address or geographical location to which the service is to be delivered is transformed in the same way, before sending it in the request to the time prediction system by the entity.

This will prevent that the time prediction system is able to locate the precise location of the recipient at any point in time. The time prediction system will be able to predict when the recipient of the service is in the vicinity of the postal address or geographical location to which the service is to be delivered. However, the time prediction system will only have this relative information but no absolute information on the surface of the earth. The time prediction system may deduce that the recipient is at home; however, the time prediction system will not know whether this home is in the United States or in Europe.

This step further improves conformity with the data protection regulations.

Preferably, the transformation of the data representing the location of the mobile device is performed by using a method chosen from a group comprising at least the following:

- Geohashing the location data and deleting a suitable number of leading digits of the Geohash code, preferably the first three digits; and
- deleting a suitable number of leading digits of the geographical coordinates of the location data, preferably deleting the integer geographical degrees and preserving the geographical minutes and seconds.

So, both the mobile device of the recipient sending the postal address or geographical location and further location information to the time prediction system as well as any entity involved in the delivery only sends postal address and location data in a transformed format to the time prediction system. The time prediction system, therefore, is unable to reconstruct the actual location on planet Earth of the recipient.

In order for the time prediction system not to be able to reconstruct the identity of the recipient, the identification code corresponding to the recipient is established in such a way, that the time prediction system cannot reconstruct the name and postal address of the recipient. To this end, for each recipient of the service, an identity code can be allocated. Preferably, the identification code is generated by hashing data identifying the recipient, preferably by hashing the email address of the recipient. If the entity sending the request to the time prediction system knows for example the email address of the recipient and knows the algorithm that is used to calculate the identification or identification code, the entity can calculate the identification code itself without receiving it e.g. from the mobile device of the recipient of the service. Equally well, the identification or identification code of the recipient can be generated by any entity involved in delivering the service or by the mobile device of the recipient. Wherever the identification or identification code of the recipient is generated, it would have to be distributed to the other players involved in delivering the service, except for the time prediction system.

In order to further improve the probability of encountering a recipient at the postal address or geographical location, and thus improving the probability of a successful delivery of the service, more members of the household of the recipient can be included in the service. To this end, a group of mobile devices of a corresponding group of recipients can send at least an identification corresponding to the individual recipient or an identification code common to all recipients from the group of recipients and data representing a location of the mobile device of the individual recipient in regular temporal intervals to the time prediction system. This requires that the additional potential recipients of the service are also regularly present at the postal address or geographical location of the recipient. For instance, additional family members or members of the household of the recipient could take part in the described method. The time prediction system will then calculate the predicted core times of presence any of the recipients from the group of recipients at the postal address or geographical location.

When using the invention, energy consumption for the delivery of the service can further be reduced.

Preferably, the time prediction system calculates the probability of the mobile device being within a predefined distance to the postal address or geographical location at a given time. The predefined distance could be such, that the recipient is likely to be reached when delivering to the postal address or geographical location. The predefined distance could therefore be 10 m, 20 m, 30 m, 40 m or 50 m.

The simplest way to calculate the probability of the mobile device being within a predefined distance to the postal address or geographical location would be by computing the relative frequency of the recipient being at the postal address or geographical location.

The predicted core times of presence of the recipient at the postal address or geographical location are preferably derived by comparing the calculated probability with a predetermined threshold probability. Values of this predefined threshold probability might be 80%, 90% or 95%, for example.

More exact and more flexible, sophisticated and reliable ways of calculating the probability of the mobile device and thus the recipient being within a predefined distance to the postal address include predicting the core times of presence using a Machine Learning or Deep Learning approach, preferably using a Recurrent Neural Network model, or a Long Short-Term Memory (LSTM) model such as a Periodic LSTM with Weather-Aware Gating Mechanisms (PewLSTM) or a Transformer-based model. These improvements help to further reduce energy consumption in the process of delivery of the service.

To further improve the probability of finding the recipient at the postal address or geographical location when delivering the service, additional pieces of information could be provided to the time prediction system. These additional pieces of information would most preferably be weather data. The time prediction system would then calculate the predicted core times of presence of the recipient at the postal address our geographical location as a function of the additional information or by taking into account the additional pieces of information.

To improve the data security of the described method, several steps can be undertaken. For example, an authentication code could be used to verify whether the mobile device is authorised to transfer data representing the location to the time prediction system. This authentication code would have been exchanged between the time prediction system, the entity, and the mobile device at some point in time.

Another possibility to further improve data security would be sending the data representing the location from the mobile device to the time prediction system using a proxy server. This way, the time prediction system would not even come to know the IP address of the mobile device of the recipient.

Yet another possibility would be that the time prediction system generates an event token after receiving a request by the entity, e.g. an online shop. The event token would be linked to a particular delivery event. After receipt of the event token by the entity, the entity or a delivery agent charged with delivering the e.g. parcel could use the event token for all future requests to the time prediction system in relation to this delivery event. The event token could also be passed on from the online shop to a delivery agent. This event token would be invalidated after successful delivery of the service to the recipient of the postal address.

The method determines predicted core times of presence of the recipient being at the postal address or geographical location to which the service is to be delivered. Unnecessary delivery attempts can further be avoided, if the actual presence of the recipient at the postal address is checked immediately before delivery of the service to the recipient at the postal address. The checking can be performed by sending a corresponding request from the entity to the time prediction system.

Alternatively, the time prediction system monitors the distance between the location of the mobile device and the postal address or geographical location. It then determines whether the mobile device is at the postal address or geographical location or can reach the postal address or geographical location in time for the predicted core times of presence. The time prediction system updates the predicted core times of presence in case the mobile device is unlikely to be at the postal address or geographical location during the predicted core times of presence. The update can either be actively sent to the entity (push service). Or the entity regularly requests such updates from the time prediction system (pull service).

In other words, the time prediction system may check the distance of moving transformed locations of the mobile device and fixed transformed postal address or transformed geographical location within the time prediction system to ensure that the time prediction system does not predict core times of presence that the moving transformed locations cannot reach in time to establish presence at the fixed transformed locations during the predicted core times.

To achieve the object of the invention, we also propose a method comprising the following steps:

- collecting data at a point of collection;
- anonymising the data at the point of collection;
- transferring the anonymised data to a data room;
- enriching of the anonymised data in the data room, wherein personalisation recommendations or insights are obtained from the data by enriching the anonymised data using e.g. a deep learning model; and
- retrieving the personalisation recommendations or insights using a cryptographic key, wherein the possibility of retrieving the personalisation recommendations or insights is limited in time.

With the help of this method, insights can be generated in a data-protection compliant way. These insights can be useful for numerous applications, i.a. for reducing energy consumption in the delivery of a service.

BRIEF DESCRIPTION OF THE SEVERAL VIEWS OF THE DRAWINGS

Other objects and advantages of the present invention may be ascertained from a reading of the specification and appended claims in conjunction with the drawings therein. For a more complete understanding of the present invention, reference is established to the following description of embodiments made in connection with accompanying drawings. The possibilities to solve the problem are not limited to the embodiments. The exemplary embodiments are shown schematically in the figures. The same reference numerals in the individual figures designate the same or functionally identical or with respect to their functions corresponding elements. In detail, the figures show:

Fig. 1    a flow diagram of a method for calculating predicted core times of presence of a user (example to facilitate understanding of the invention);

Fig. 2    a schematic representation of method steps carried out by a time prediction system (example to facilitate understanding of the invention);

Fig. 3    a schematic representation of an information exchange overview between a user, an app operator, and the time prediction system (example to facilitate understanding of the invention);

Fig. 4    a flow diagram of the method for requesting a presence prediction of a user according to one embodiment;

Fig. 5        a schematic representation of an information exchange overview between a user, an app operator, and the time prediction system upon generation of an event by the user (example to facilitate understanding of the invention);

Fig. 6        a flow diagrams of a "post position API" and of an "event token API" according to one embodiment;

Fig. 7        another flow diagrams of a "post position API" and of an "event token API" according to one embodiment;

Fig. 8        a flow diagrams of a "core times API" and of a "Backup check API" according to one embodiment;

Fig. 9A to 9C    are schematic representations of a RNN cell, a LSTM cell, and a PewLSTM cell, respectively;

Fig. 10       a schematic representation of a PewLSTM architecture;

Fig. 11       a schematic overview of one embodiment of the described method; and

Fig. 12       a schematic overview of another embodiment of the described method.

DETAILED DESCRIPTION OF THE INVENTION

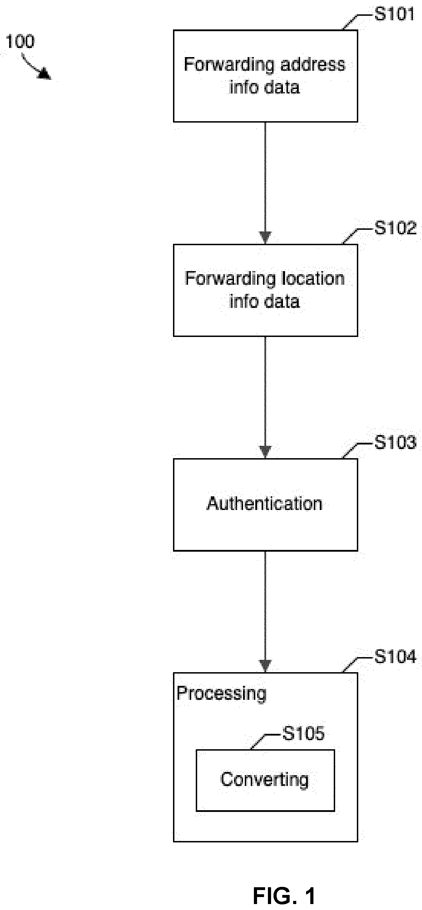

In the following paragraphs, **Figs 1, 2, 3 and 5** illustrate examples to facilitate understanding of the invention.

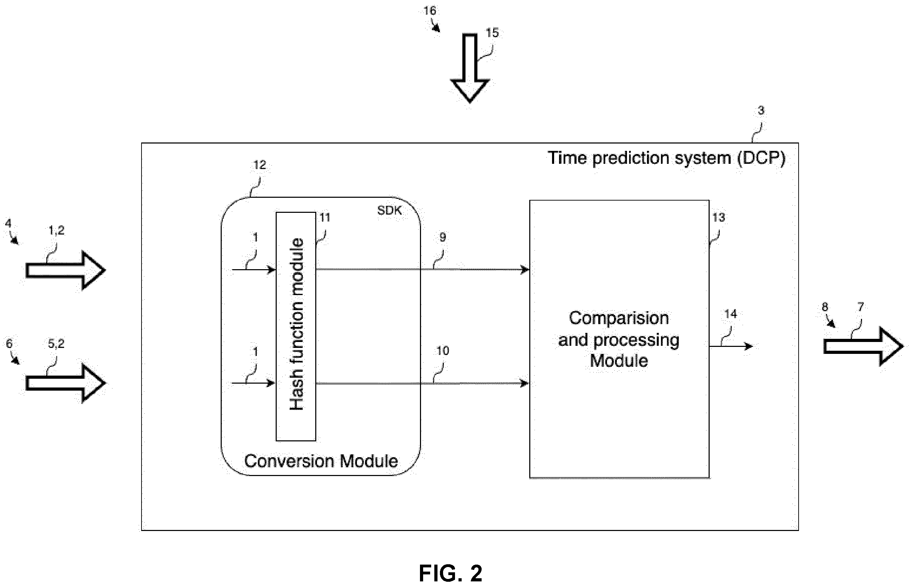

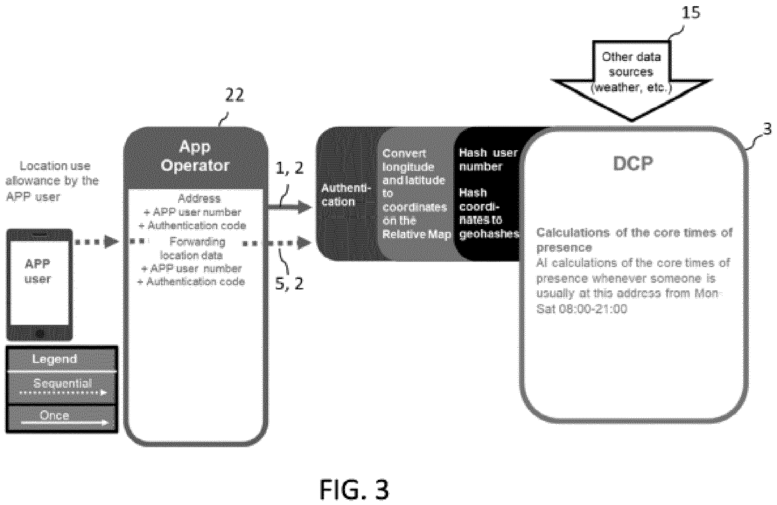

The present approach enables knowing the core times when users (i.e., consumers) will be present at addresses in compliance with the General Data Protection Regulation (GDPR). For this, the operator, such as an app operator 22 (**see Fig. 3**), interacts with a time prediction system 3 (see **Fig. 2 and 3**), as will be described in the following. The app operator 22 could e.g. be an online shop.

The time prediction system 3 is configured to provide a Data protection compliant Core times of Presence Prediction (DCP). Therefore, the time prediction system 3, according to the present disclosure, can also be intended as a DCP system.

As shown in **Fig. 1** and **2,** the method 100 for calculating predicted core times of presence 7 of a user comprises in one example at step S101 the forwarding of postal address information data 1 of the user together with identification data 2 to the time prediction system 3. In particular, these information data are sent by the app operator to the time prediction system 3 through a forwarding element, such as for example an app operator 22. The postal address data 1 and identification data 2 can be called first input data 4.

At step S102, location information data 5 of the app user are forwarded to the time prediction system 3 together with identification data 2 of the app user. The app user is the recipient of the service. The location data 5 and identification data 2 can be called second input data 6. These data are forwarded in a sequential manner meaning they are sent more than once at different times or regular intervals. At step S103, the authentication of the app operator is checked by the time prediction system 3.

The first input data 4 and the second input data 6 are then processed at step S104 for calculating predicted core times of presence 7 of the app user. This results in a prediction of the core times of presence 7 as output data 8 based at least on the postal address information data 1 and on the location information data 5 of the app user. The predicted core times of presence 7 are the timeframes DCP calculated as highly probable that at least one person will be present at the postal address.

The processing of the input data comprises a conversion step (S105). In particular, the postal address information data 1 of the app user are converted into a position of the postal address on a Relative Map. With Relative Map we designate any coordinate system that does not allow an identification of the location on Earth of any coordinate on the Relative Map. However, the coordinates on the Relative Map allow to measure distances between different coordinates on the Relative Map within a predefined distance range.

After translating the geographical coordinates of the app user 22 into coordinates on the Relative Map, the coordinates on the Relative Map are then hashed into an address geohash 9 using a hash function. The location information data 5 of the app user are converted into a position of the location on the Relative Map, which are then transformed using the geohash function 10. Advantageously, any attempt to revert the geohashes to the original data would only give fictitious information not related to the real personal data and postal address and location data provided by the app user, thereby increasing the data protection and security of the app user. As will be detailed in the following, the DCP system uses multiple layers of data protection and security technology to fulfill global data protection standards.

It is noted that the DCP system uses prescriptive analytics, which means providing automated action recommendations concerning the future based on facts and probabilityweighted projections based on predictive analytics. Predictive analytics encompasses various statistical techniques such as data mining, predictive modeling, machine learning, and AI that analyze current and historical facts to make predictions about future or otherwise unknown events.

As input data (first and second input data), the app user's mobile location data can be considered as the core data. However, additional data, such as regional information data like observed weather conditions or predictions, can additionally be used.

In another example to facilitate understanding of the invention, the method 100 comprises providing the time prediction system 3 with additional information 15 as third input data 16, wherein in particular additional information data 15 comprise weather data. The automated analysis of this information is used to learn the effects of such conditions (i.e. weather) on presence patterns at addresses and improve predictions. It is noted that regional information data are not limited to information such as weather information and that further data sources can be added. Further data sources may include, but are not limited to, information, such as traffic or local holidays.

**Fig. 2** schematically illustrates the elaboration of the input data 4, 6, 16 into the output data 8. The first input data 4 comprise in one example at least postal address information data 1 and identification data 2 of the app user. These data are provided to the time prediction system 3 or DCP system only once. The second input data 6 comprise at least location information data 5 and identification data 2 of the app user. These data are sequentially provided to the time prediction system 3. Additionally, third input data 16 are provided to the time prediction system 3. These data comprise in particular additional information data 15, such as weather information.

The time prediction system 3 comprises a conversion module 12 for converting postal address information data 1 and the location information data 5 received by the app operator into hashes. This conversion module 12 comes in the form of a Software Development Kit (SDK). Specifically, the postal address information data 1 of the app user are converted into a position of the postal address on the Relative Map to form a geohash related to the postal address (i.e. an address geohash 9), whereas the location information data 5 of the app user are converted into a position of said location on the Relative Map to form a geohash related to the location (i.e. a location geohash 10). This is done through a hash function module 11. This coordinate will be then hashed using a hash function to obtain a geohash. In other words, the exact position of a location on earth of the app user is deleted from the address geohash 9 and location geohash 10 when converting the location information data 5 and postal address information data 1 of the app user into positions of the postal address and of the location on the Relative Map. The app user number is hashed to calculate an identification code.

In some embodiments, the position of the address geohash 9 is periodically compared with the position of the location geohash 10 on the Relative Map to obtain comparison result data 14 for predicting the core times of presence 7 of the app user. For this, the time prediction system 3 also comprises a comparison and processing module 13. In particular, the distance between the position of the postal address on the Relative Map and the positions of other visited locations on the Relative Map are calculated to obtain the comparison result 14.

The periodical comparison serves as basis to provide a prediction of core times over a determined time frame. The periodical comparison assures also the continual learning of core times of presence and guarantees the update of the core times of presence if a change in patterns or behavior is detected.

To further improve data security, the prediction of core times is only calculated if there is a prediction request from the entity and will only be repeated until the event, i.e. home delivery, is completed. In other words, the presence of the app user at a determined postal address is predicted only if necessary for the delivery of the service. If no delivery event is scheduled, no core times will be calculated.

**Fig. 3** shows an application of the method 100. In the example of **Fig. 3,** the first input data 4 and the second input data 6 are forwarded to the time prediction system 3 by an app operator 22.

The DCP system can be integrated via an Application Programming Interface (API). To work at full capacity, DCP needs to be integrated into agile systems, which are capable of processing live data. DCP can additionally operate as White Label Solution invisible within the systems it was integrated into, as an additional feature. Examples of essential systems that can be connected with DCP as Last Mile Logistics use case could be the offer processing system of an online retailer as well as the transport management system, tour planning system, and routing system of a delivery service.

With reference to **Fig. 3,** the app user (or consumer) allows the location use inside the app of the app operator 22. Once this happened, the app operator 22 automatically forwards the postal address information data 1 together with the user ID number 2 of the app user (recipient of the service) to the time prediction system 3 (i.e., DCP system). Additionally, the location information data 5 and the ID number 2 of the app user are sequentially forwarded by the app operator 22 to the DCP system 3. It is noted that the sequential transmittal of the data are identified with a dashed line in the figure, whereas the single transmittal he is identified with a continuous line.

As soon as any message is directed to the DCP API system, the first step is authentication. New app operators receive an authentication code in the DCP integration process, which has to be sent with every message the app operator sends to the DCP API. In particular, the method 100 comprises checking this authentication code by the time prediction system 3, upon receiving at least first and second input data 4, 6. Messages without valid authentication code are not processed, and incoming data without authentication code are automatically rejected.

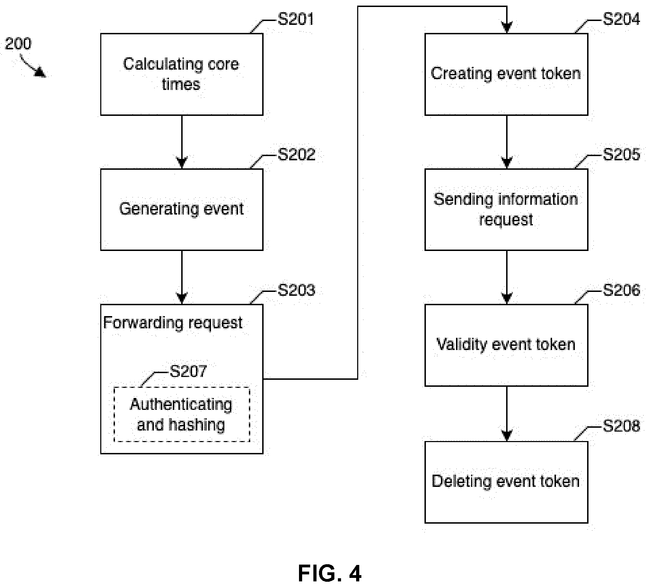

Fig. 4 is a flow chart of an embodiment of the method 200 for requesting a presence prediction of an app user. In particular, for requesting a presence prediction of at least one user at a specific postal address. This can be useful in case of more than one user at the same postal address.

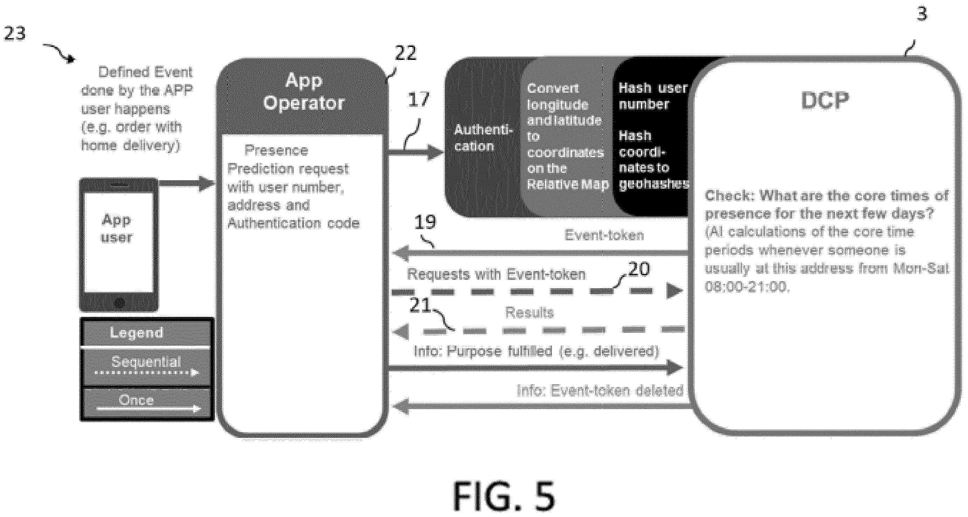

At step S201, the predicted core times of presence 7 of the app user are calculated. This prediction is obtained according to the method 100 as described above. Therefore, all the detailed steps will not be repeated. At step S202, an event 23 is generated by the app user or the entity involved in the delivery of the service. The event 23 can be for example a commercial order. A presence prediction request 17 (see **Fig. 5**) is then forwarded to the time prediction system 3 (S203), typically by the entity involved in the delivery of the service.

In some embodiments, the presence prediction request 17 comprises a delivery address 18, a user number or identification of the app user, an authentication code of the app operator, and event information data, the event information data informing in particular that the event 23 is occurring.

At step S204, an event token 19 is created by the time prediction system 3 and an information request 20 about core times of presence 7 of the app user is sent together with the event token 19 to the time prediction system 3 (S205).

Finally, at step S206, the validity of the event token 19 is analyzed and a result information 21 including the previously calculated predicted core times of presence 7 of the app user at the requested delivery address is sent. It is noted that the result information 21 does not comprise any personal data of the app user and no map data connected to real geographic positions on the earth.

In some embodiments, the method comprises authenticating and hashing the presence prediction request 17 by the time prediction system 3. This is carried out at step S207.

Upon completion of the event 23 generated by the app user, the method can comprise deleting the event token 19 (at step S208).

Fig. 5 shows an example of an application of the method 200.

An event 23 (e.g. an order with expected home delivery) is generated. As soon as said defined event 23 happens, the information that this event happened is forwarded - together with the corresponding customer number R identification and postal address - to the DCP system 3 in a presence prediction request 17.

After successful authentication and hashing of this request 17, the DCP system 3 automatically creates and sends back an event-token 19. With this event token 19, it is possible to send an information request 20 to the DCP API system 3 to obtain a result information 21. If an event token 19 is valid, the DCP system 3 replies with the result information 21. Within this result information 21 only the predicted core times of presence 7 at the postal address are present. The delivery address itself and app user number 2 are not within this result 21, meaning the result 21 does not contain any personal data. In other words, the names of app users/consumers remain unknown to the DCP system 3 in the complete relationship between the app operator 22 and DCP system 3. Only the entitled app operator 22, who provided the app information in the first place, can link the results to a postal address, as the app operator 22 knows for which app user the event token 19 has been requested.

As soon as the purpose of the event token 19 is fulfilled (e.g. shipment delivered), this information is automatically forwarded to the DCP system 3. The DCP system 3 automatically and immediately deletes the event token 19 and sends back the information that the event token 19 has been deleted. It is impossible to obtain any information with a deleted token, and all requests with a deleted token are automatically rejected.

It is noted that the software of the DCP system 3 was built to exceed all global data protection standards to ensure worldwide applicability and acceptance. Therefore, a minimum personal data approach was pursued, meaning using the absolute minimum regarding personal data necessary to reach the purpose the app user agreed upon in the app (mobile application) of an app operator 22 using the DCP system 3.

As mentioned above, the present approach improves data protection and security. The DCP system 3 processes mobile location data under significantly stricter standards than known from prevailing Location Based Services (LBS). The DCP system 3 sets new standards in data protection and security by a variety of measures covered in the following.

1. Authentication code

Due to the authentication code, only entitled app operators 22 can interact with the system regarding events 23 of their own app users.

2. No names & hashing of all incoming data

The system cannot process or accept names, so names remain unknown to the system. App user numbers, postal addresses, and location data are hashed. There is no plain text data within the system.

3. Relative Map (no real addresses & no real positions)

The postal address and location data 1, 5 are in the system as geohashes 9, 10. These geohashes 9, 10 are stored as positions on the Relative Map. As there is no real map data, even if the system were to be hacked and the hacker would find a way to "unhash" the hashed positions and the hashed address, it would be impossible to make use of the data as it would only be positions on a Relative Map (no addresses, no cities, no countries). Contrary to prevailing LBS, the present approach does not track which streets app users used while traveling, or which addresses and shops they visited. Furthermore, the DCP system 3 does not analyze purchasing preferences and is not used to influence users/consumers in any way.

4. No absence confirmation or prediction

The DCP system 3 does not predict absence timeframes and the results do not confirm absence. In general, timeframes at addresses can be divided in the categories core times of presence, core times of absence and variable behavior. The DCP system 3 cannot differentiate between and does not analyze core times of absence and variable behavior. Instead, the present approach only predicts the core times of presence when usually always someone is present at the postal address and updates these timeframes.

5. Location use allowance

The DCP system 3 only processes data of app users, which confirmed continuous location use in an app of an app operator 22 with DCP integration for purposes made available to the app user in the confirmation process.

6. Event-token / Provided results without addresses & personal data / time limit

The results the DCP creates can only be accessed with a valid event token 19. This token is sent to the party, which provided the app user information in the first place. The processed results, which are only available with a valid event token 19 until the event 23 purpose is fulfilled (e.g. shipment is delivered), do not contain addresses or personal information of the app user. Only the entitled app operator 22, who requested the event token 19 can link the results to an postal address for the duration of the event 23 (e.g. delivery).

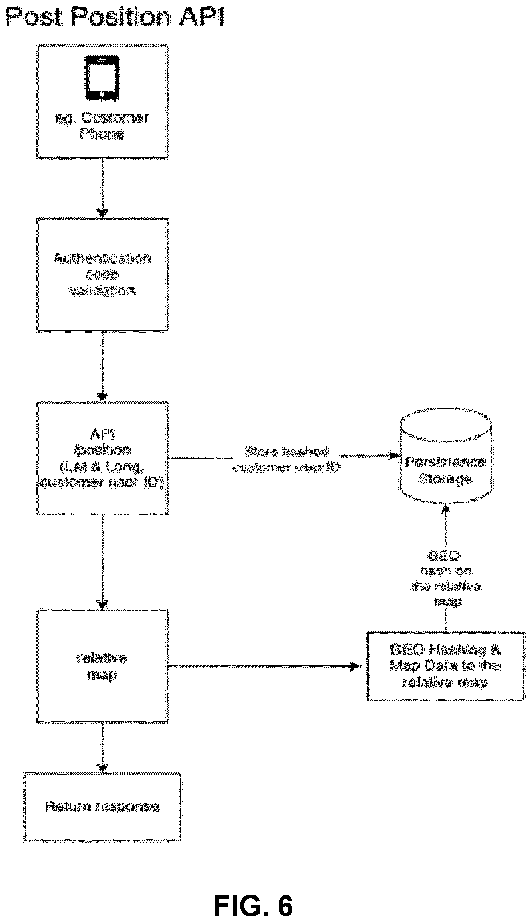

In **Fig. 6, 7** and **8** flow diagrams regarding operational aspects of the above-described methods are illustrated for some embodiments. These flow diagrams represent Application Programming Interfaces (API). An API is a public endpoint that checks authentication, collects and forwards data, and returns information.

In **Fig. 6,** the Post Position API in this embodiment collects the authentication code and checks if it is valid. If it is not valid, the request is rejected. If it is valid, the request is authenticated, and the customer ID 2 is hashed and stored in Persistance Storage, and the positions on the Relative Map and converted to geohashes which are stored in Persistance Storage.

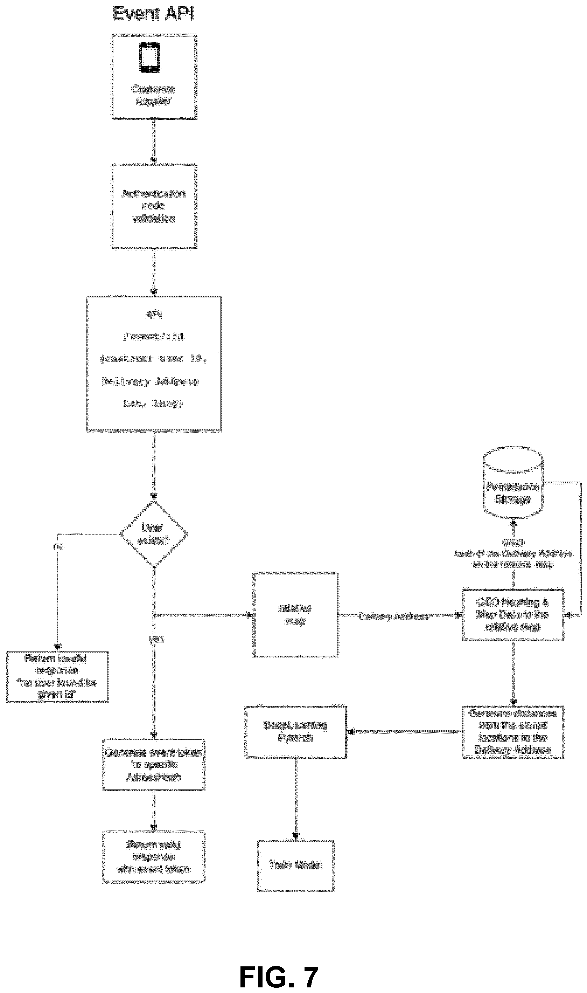

In **Fig. 7,** the Event API collects the authentication code and checks if it is valid and the user exists. If it is not valid, the request by the entity is rejected. If it is valid, the request is authenticated. The latitude and longitude of the delivery address on the Relative Map will then be hashed as Geohash 9. The Geohash of the postal address 9 will then be stored in the Persistance storage together with the hashed customer ID and the information that a defined event 23 happened. After the Relative Map calculated the distances with the stored data, it will feed the model with the distances of the delivery address and train the model.

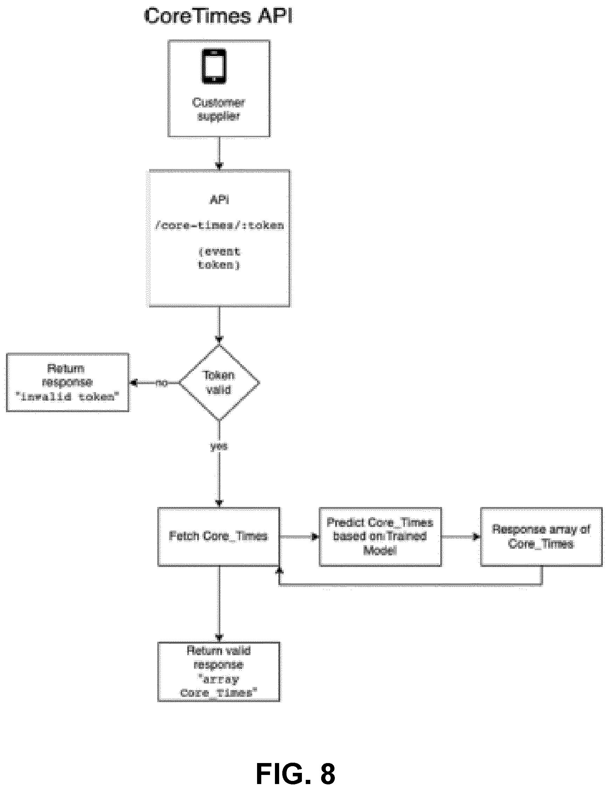

In **Fig. 8,** the Core Times API collects the event token and checks if it is valid. If it is not valid, the request is rejected, if it is valid, the system fetches the predicted core times based on the trained model and returns them as an array of core times of presence. Fetching and predicting core times of presence 7 will be repeated if the event is not finished to doublecheck the predictions and to respond to any changes in the behavior of the app user.

In some embodiments, the core times of presence 7 of the app user can be updated if a variation in the match between the position of the address geohash 9 and the position of the location geohash 10 on the Relative Map occurs in a predefined period of time. Capturing changes in presence behavior and updating presence predictions accordingly is vital to adapt to situations like changing work times or changing habits. For example, someone taking on a night shift job, or someone starting to go for a walk in the park at noon time and similar changes can affect presence predictions. These changes are especially important to capture for certain services relating to consumer presence, such as home delivery.

As will be described in more detail in the following, the data are processed using a Machine Learning or Deep Learning approach in order to predict core times of presence 7 of the app user. A Machine Learning or Deep Learning model is trained to calculate the presence of the app user at a specific time frame. Specifically, the comparison result data 14 obtained by the distance calculated between the position of the postal address and the positions of other visited locations on the Relative Map are fed into a Machine Learning or Deep Learning algorithm to perform a core times of presence prediction.

The model according to the present approach aims to predict app users' core time windows of presence at postal addresses in part based on historical data. This kind of problem is called "time series forecasting". Many models are used to solve such a problem. For example, the univariate "Auto-Regressive Moving Average (ARMA)" for a single time-series data, which combines Auto-Regressive (AR) and Moving Average (MA) models, or the Univariate "Auto-Regressive Integrated Moving Average (ARIMA)" which takes into consideration the differencing in comparison to ARMA are all traditional methods for time series data prediction. New approaches have been recently introduced with the prevalence of Machine Learning (ML) and Deep Learning (DL) techniques. The most successful algorithms were Deep Learning-based such as Recurrent Neural Network (RNN) and especially the Long Short-Term Memory (LSTM). The "PewLSTM", is a new periodic weather-aware LSTM model. The PewLSTM assesses the historical data along with weather and weekdays to estimate the future parking behavior and results in better accuracy of about 20% than the state-of-the-art parking behavior prediction method. As the problem of predicting the core time presence of a person's presence at a specific postal address is weekday- and weather-dependent, the PewLSTM appears to be suitable to be used for the present method.

Time series data is a collection of successive quantities collected over even intervals in time. These measurements are used to track the development of the data. Analyzing them using statistics and models to predict the evolution of the variable in the future is called time series forecasting. Time series forecasting can be either univariate when a single feature is used or multivariate when using multiple features (which is more complex). Predicting a single value for the subsequent time-step or multiple time-steps in the future are respectively called one-step and multi-step time series forecasting. As mentioned above, the difference between univariate and multivariate forecasting is the number of features used to train the model, and, therefore, only the dimension of the input vector needs to be changed. However, there are numerous methods for multi-step forecasting in comparison to one-step, among which we mention: direct multi-step, recursive multi-step, and multiple output forecast. In a direct multi-step forecast, a different model is trained for each prediction time step, which differs from the recursive multi-step forecast in which the one-step model is recursively used each time for a prediction. In a multiple-output forecast, a model is trained to predict the whole output in one shot as a vector.

One of the Deep learning approaches for time series forecasting is the RNN. A recurrent neural network is a deep learning model whose input is sequential data, such as time-series data. Its output depends on prior elements within the sequence. RNNs can handle variablelength sequence inputs by using their internal state (memory), and the internal state is called a recurrent hidden state.

We define $x = (x_1, x_2, x_3, ..., x_t)$ the input sequence and ht the recurrent hidden state at time step t. ht is updated using the equation:

$$h_t = \sigma \left( W_x \, x_t + W_h \, h_{t-1} + b_t \right)$$

where the nonlinear activation function is denoted by $\sigma$, which can, for instance, be a logistic sigmoid, a hyperbolic tangent function, or rectified linear unit (ReLU). $W_x$, $W_h$ stand weight matrices, and $b_t$ for the constant bias.

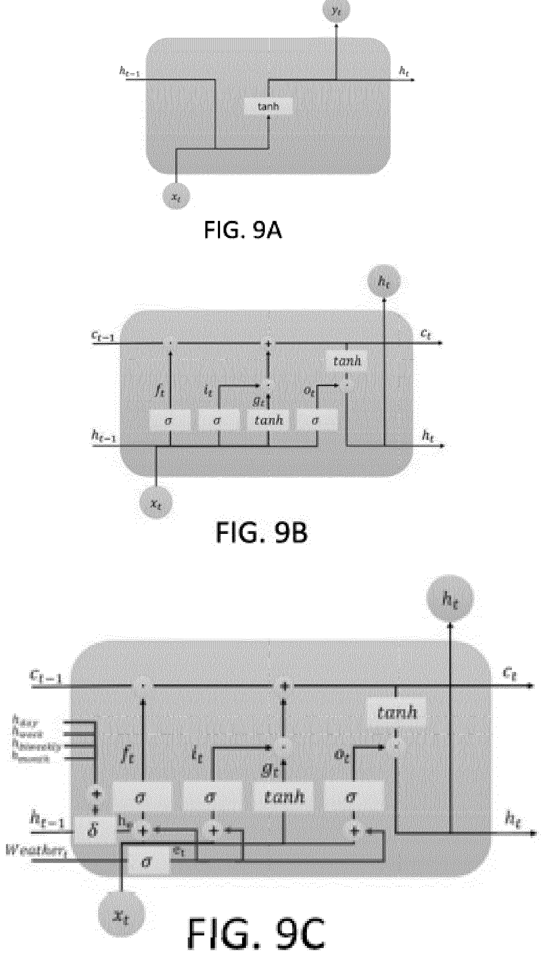

The RNN cell is represented in **Fig. 9A**.

RNNs showed difficulties in learning long-term dependencies, as they suffer from the "vanishing gradients" problem. The gradient is the partial derivative of a function concerning its inputs, and it measures the impact of the change of the input on the output. The "vanishing gradient" problem happens when the weight matrices become so small that the model does not learn anymore. Since a long sequence implies many layers, the gradient is easily prone to vanish. This problem is addressed by the the Long Short-Term Memory (LSTM) model.

Its variables are:

$$f_t = \sigma \left( W_{fx} \, x_t + W_{fh} \, h_{t-1} + b_f \right)$$

$$i_t = \sigma \left( W_{ix} \, x_t + W_{ih} \, h_{t-1} + b_i \right)$$

$$g_t = tanh \left( W_{gx} \, x_t + W_{gh} \, h_{t-1} + b_g \right)$$

$$o_t = \sigma \left( W_{ox} \, x_t + W_{oh} \, h_{t-1} + b_o \right)$$

$$c_t = g_t \odot i_t + c_{t-1} \odot f_t$$

$$h_t = tanh \left( c_t \right) \odot o_t$$

Where $\odot$ denotes the Hadamard or element-wise product and wherein $f_t$ stands for the forget gate and determines the information that needs to be forgotten from the LSTM memory. The input gate that determines whether the new information will be stored in the LSTM memory, is represented by it. $g_t$ is the cell input activation through which the vector of new candidates is stored in the LSTM memory. $o_t$ is the output gate that determines the value of the next hidden state. The cell state $c_t$ stores information from previous intervals in the LSTM cell, and in the hidden state. $h_t$ carries information from the previous cells to the next cell. The weight matrices $W$ represent how much a change in the input will have upon the output and the biases b determine the difference between the function's output and the desired result.

The LSTM cell is represented in **Fig. 9B**.

Although the LSTM model solves the "vanishing gradient" problem, it lacks learning periodic patterns and weather information. These problems are solved in a Periodic LSTM with Weather-Aware Gating Mechanism called PewLSTM. The PewLSTM cell is represented in **Fig. 9C.**

The PewLSTM differs from the typical LSTM in that new gates have been added for past periodic observations and weather data. The behavior at the same time last day, last week, and last month can impact the current one. Biweekly behavior can also be considered since it often happens for human activities, such as work or studying. The variables $h_{day}$, $h_{week}$, $h_{bi-weekly}$ and $h_{month}$ describe the hidden states representing these behaviors. Then these hidden states are integrated with the hidden state $h_{t-1}$ of the LSTM using a special weight gate $\delta$ into the following equation. The purpose of the weight gate is to continuously update the weights of each parameter.

$$h_o = \delta \left( W_d\, h_{day} + W_w\, h_{week} + W_{bw}\, h_{biweekly} + W_m\, h_{mon} + W_{t-1}\, h_{t-1} \right)$$

A weather aspect vector $e_t$ can be introduced to capture the influence of the weather information on presence behaviors, which is integrated into the forget-, input- and output gate. The weather at time step t is used as an input of a standard feedforward layer with a sigmoid activation function.

$$e_t = \sigma \left( W_e\, weather_t + b_f \right)$$

The weighted hidden state $h_o$ and the weather input $e_t$ are then integrated into $f_t$, $i_t$, $o_t$, which are the forget-, input- and output-gate, respectively. However, the equations of the hidden state $h_t$ and the cell state $c_t$ remain the same as for LSTM, as the periodic and weather information is already operated and saved by the modified variables $f_t$, $i_t$, $o_t$, as illustrated in the following equation.

$$i_t = \sigma \left( W_{ix}\, x_t + W_{ih}\, h_o + W_{fe}\, e_t + b_i \right)$$

$$g_t = tanh \left( W_{gx}\, x_t + W_{gh}\, h_o + b_g \right)$$

$$f_t = \sigma \left( W_{fx}\, x_t + W_{fo}\, h_o + W_{fe}\, e_t + b_f \right)$$

$$o_t = \sigma \left( W_{ox}\, x_t + W_{oh}\, h_o + b_o \right)$$

In some embodiments, the calculation of predicted core times 7 of at least one user at a specific postal address is repeated in sequences using different data processing techniques.

Together with the distance calculation of hashed location data and hashed postal address on the Relative Map, the repetition in sequence using different techniques determines a live optimization. In particular, predicted core times of presence 7 are deleted when it is recognized that presence cannot be established in time at the postal address. Therefore, even if there is a mistake in the prediction of core times of presence for the next few days, the live optimization erases the mistake automatically if there is no outlier case. Outlier cases include but are not limited to situations where the app user turned off his or her mobile, the mobile of the app user has a dead battery, the app user left the mobile somewhere, or the unlikely event of a server breakdown.

A loss function is used during a model's training to determine how a model performs by representing the error between the model's output and the target variable (variable to be predicted). The goal is to get a loss as small as possible since it means the closeness between predicted and real data. There are many loss functions, such as the mean absolute error (MAE), the mean squared error (MSE) for continuous output data, and binary cross entropy (BCE) for binary data. Since the output is binary (predicted core time of presence or no predicted core time of presence in the timeframe), the binary cross entropy (BCE) loss is introduced along with a variation of this loss, which enables improving the result of the trained model.

The formula of Binary cross entropy loss is given through:

$$L = \frac{1}{N} \sum_{i=1}^{N} -\left( y_i * log(p_i) + (1 - y_i) * log(1 - p_i) \right)$$

wherein $p_i$ and $y_i$ are the i-th scalar value of the model output and i-th scalar value of the target value respectively. N stands for the output size.

The binary cross entropy loss requires using the sigmoid activation function before the target layer since the sigmoid compresses the output between 0 and 1. It works as the following: When the actual class value is 1, the second part disappears and vice versa. Since the target values $p_i$ are between 0 and 1, the logarithmic of $p_i$ or 1 - $p_i$ is between -infinity and 0. So the closer the predicted value to the actual class is, the smaller the loss is.

The weighted Binary cross entropy loss is an extension of the Binary cross entropy loss. This extension is done by adding more weight to the positive examples to punish false predictions of positive examples. In particular, it punishes wrong predicted core times of presence at a certain position. The formula of weighted Binary cross entropy loss is given through:

$$L = \frac{1}{N}\sum_{i=1}^{N} -(w_i * y_i * log(p_i) + (1 - y_i) * log(1 - p_i)$$

where $p_i$, $y_i$ and $N$ are the same as before and $w_i$ the weight of positive examples.

As regards the input data for calculating the predicted core times of presence 7 according to the present methods, these are the distances between the location and the postal address, as mentioned above. The distance $d$ between the position of the postal address on the Relative Map and the position of other visited locations on the Relative Map is then calculated using the distance formula on a 2D plane which is:

$$d = \sqrt{(x_2 - x_1)^2 + (y_2 - y_1)^2}$$

where $(x_1, y_1)$ $(x_2, y_2)$ Map.

The x and y values can e.g. be calculated by transforming geographical minutes and seconds into an x,y-plane. If e.g. Geohashing was used, the x and y values can be obtained by decoding the Geohash value of the transformed location data. In general, the method used to find the x and y values must be suitable for retransforming the transformed location data.

The distance is given in meters. Outliers are then filtered using a Z-score of three and set as the minimum value of outliers. A Z-score of three means that any distance outside three standard deviations of the data distribution would be an outlier.

Weather data will be used as input data for the model along with the distances. Weather features include but are not limited to air temperature, relative humidity, wind speed, and precipitation height. The data are normalized before being given to the model using the MinMax Scaler.

With reference to the model training, it is noted that the custom periodic LSTM with the weather-aware gating mechanism is implemented using the variables defined above. For each batch size, the hidden state of the last day, week, biweekly, and month is captured along with the weather information to calculate the next hidden state, which is then used in backpropagation to update the model's parameters. Backpropagation represents the computation of the gradient of the loss function with respect to the network's weights. An optimizer, a learning rate, a number of epochs, and a batch size are needed to train the Deep Learning model. The optimizer is the function that searches for the best parameters and weights to optimize the results. The learning rate is the step used by the optimizer at each iteration to minimize the loss function. The number of epochs represents the number of times the model is trained on the whole training data, and the batch size defines the number of samples used each time to update the model's weights. In particular, the Adam optimizer, a learning rate of 0.01, a number of epochs of 150, and a batch size of 156 can be used in training.

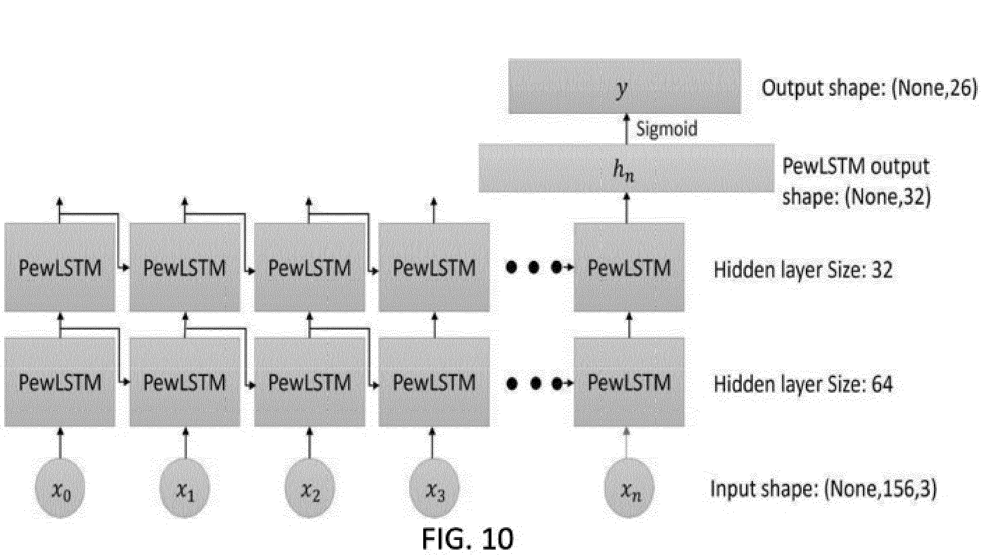

An example of the architecture of the PewLSTM model with possible input and output sizes is shown in **Fig. 10.** The PewLSTM model consists of one input layer, two hidden layers, and one output layer. The input layyer has three dimensions. The first dimension corresponds to the batch size; the second corresponds to the number of past distances used to make the prediction (If we capture locations every 5 minutes between 08:00 and 21:00, the number of past distances is 156 data points). The third is the number of features used depending on the number of weather features. For example, the third dimension of the input vector is 3 when temperature and humidity are used as weather features since the first feature is the distances vector and the temperature and humidity vectors are, accordingly, the second and third features. The second and third layers in the architecture shown in **Fig. 10** are hidden layers, which identify features from the input data and use these to correlate between distances and core times of presence. The last layer is the output layer which constitutes the output of the PewLSTM after applying the sigmoid activation function to calculate the binary cross entropy loss. For example, an output vector of size 26 is used to predict the core time of presence the next three days between 8:00 and 21:00 with a 30 minutes interval.

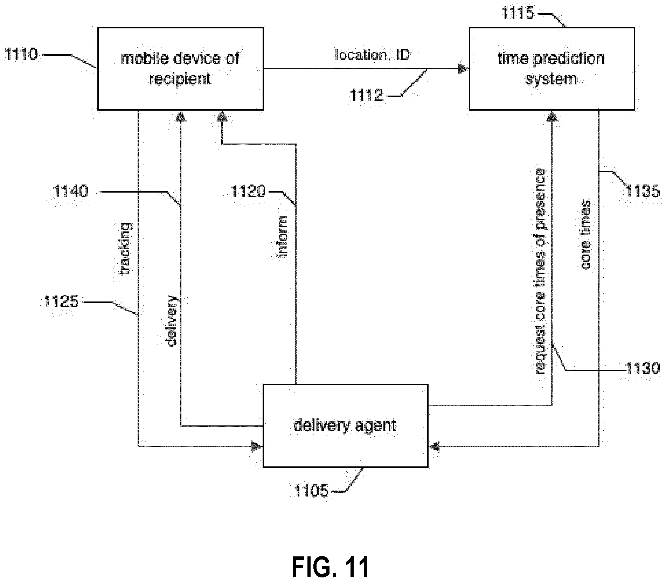

**Fig. 11** schematically shows an overview of one embodiment of the described method for saving energy in the delivery of the service. The recipient regularly carries with him a mobile device. The recipient has installed on the mobile device 1110 an app, which is linked to the entity 1105 involved in the delivery and to a time prediction system 1115. During the installation process, an identification code was assigned to the app on the mobile device 1110, the mobile device or the recipient. In step 1112 the app regularly sends its transformed location together with the identification code to the time prediction system 1115.

In the embodiment according to **Fig. 11** the entity 1105 receives an order to deliver a parcel to the recipient. The entity may subsequently inform in step 1120 the recipient via the app on the mobile device 1110 about the intended delivery of the parcel. This would put the recipient of the service in a position to track 1125 the status of the delivery.

Following receipt of the order to deliver a parcel to the recipient, the entity 1105 sends a request 1130 to the time prediction system 1115. The request contains the identification code, the delivery address in the form of either a postal address or a geographical location to which the parcel is to be delivered and the earliest time and day of delivery feasible for the entity 1105. With this request, the entity 1105 asks the time prediction system 1115 to transmit predicted core times of presence of the recipient at the delivery address.

The time prediction system 1115 calculates the core times of presence of the recipient at the delivery address, using the information received in the request 1130 from the entity 1105 and the continuously received transformed location data 1112 of the mobile device of the recipient. In step 1135 the time prediction system 1115 transmits the core times of presence of the recipient at the delivery address to the entity 1105. The core times of presence will be given for a time period starting with the earliest time and day of delivery feasible for the entity 1105 and stretching for example over two or three days.

With the help of the core times, the entity 1105 is able to schedule the delivery 1140 to the recipient. This approach reduces unsuccessful delivery attempts and inefficiencies related to delivery appointments, thus reducing energy consumption of the delivery service.

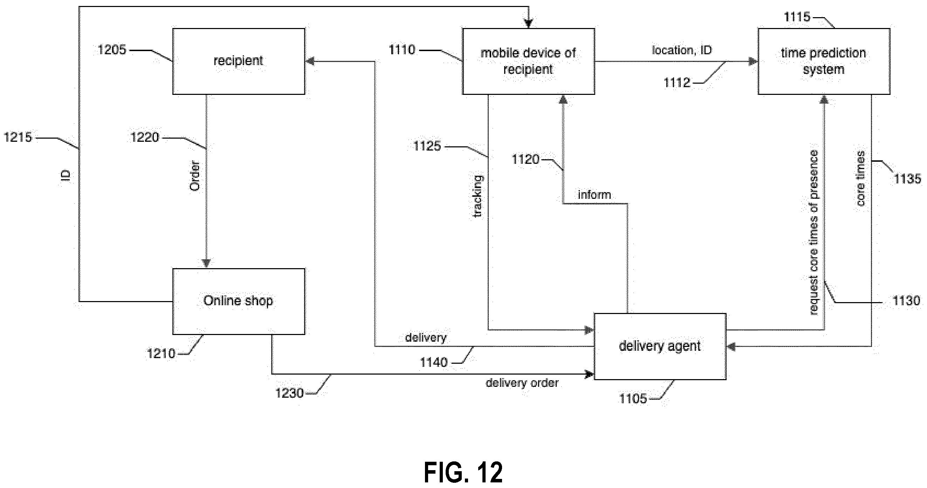

**Fig. 12** shows another embodiment of the described method for saving energy in a delivery service. **Fig. 12** shows the embodiment of a recipient 1205 ordering a good from an online shop 1210. Many of the steps shown in **Fig. 12** are identical to corresponding steps in **Fig. 11.** They carry the same reference numeral and will not be repeated again in the description of **Fig. 12.**

The recipient 1205 must be registered with the online shop 1210. In the course of this registration, the online shop 1210 collects the name and postal address or geographical location of the recipient 1205. In the embodiment of **Fig. 12,** the online shop 1210 then generates an identification code for the recipient 1205. In step 1215, this identification code is transmitted from the online shop 1210 to the app on the mobile device 1110 of the recipient 1205 (alternatively, the identification code can be generated in the app on the mobile device). This enables the mobile device 1110 to regularly send its transformed location together with the ID in step 1112 to the time prediction system 1115.

The ordering of a good in the embodiment shown in **Fig. 12** starts with the recipient 1205 ordering a good in step 1220 from an online shop 1210. After receipt of this order, the online shop 1210 sends a delivery order to the delivery agent 1105. This delivery agent 1105 can either be independent from the online shop or a department of the online shop. The delivery order contains the information necessary to put delivery agent 1105 in a position to fulfil the delivery order. This requires that the delivery order contains the name and postal address or geographical location of the recipient 1205. Furthermore, the order must contain at least information about the good or parcel to be delivered and where to pick it up.

Once the delivery agent 1105 has received the delivery order, it can proceed with the same steps as have been described in conjunction with **Fig. 11.**

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from essential characteristics. The described embodiments are considered in all respects to be illustrative and not restrictive. The scope of the inventions are, therefore, indicated by the appended claims, rather than by the foregoing description. All changes which come within the meaning and range of equivalence of the claims are to be embraced within their scope.

**Claims**

1. Method for reducing energy consumption for the delivery of a service to a recipient (1205) of the service at a postal address (1), the method comprising the following steps:

   1.1 a mobile device (22; 1110) of the recipient sends (S102; 1112) at least
   1.1.1 an identification code (2) corresponding to the recipient (1205) and
   1.1.2 data representing a location (5) of the mobile device (22; 1110)
   1.1.3 in regular temporal intervals to a time prediction system (3; 1115);
   1.1.4 wherein the data representing the location (5) of the mobile device (22; 1110) of the recipient (1205) are transformed on the mobile device of the recipient before sending them to the time prediction system (3; 1115) in such a way,

1.1.4.1 that location of the mobile device cannot be localized on the earth by the time prediction system,

1.1.4.2 but the transformed location data allow the time prediction system (3; 1115) to measure distances between different locations of the mobile device within a predefined distance range; and in that

1.1.5 the postal address (1) to which the service is to be delivered is transformed in the same way;

1.2 the time prediction system (3; 1115) receives and stores the data representing the location (5) and stores them together with the identification code (2) of the recipient (1205) and a time stamp;

1.3 an entity (1105) is receiving an order (1230) to deliver the service to the recipient (1205) at the postal address (1);

1.3.1 the order (1230) including at least

1.3.1.1 the postal address (1) and

1.3.1.2 data identifying the recipient;

1.3.2 the entity (1105) further receives the identification code (2) of the recipient (1205) or calculates the identification code of the recipient based on the data identifying the recipient;

1.4 after receiving the order (1230), the entity (1105) sends a request (S205; 1130) to the time prediction system (3; 1115) for providing to the entity predicted core times of presence (7) of the recipient (1205) at the postal address (1);

1.4.1 the request (S205; 1130) containing at least,

1.4.1.1 the postal address (1) and

1.4.1.2 the identification code (2) corresponding to the recipient (1205);

1.5 after receiving the request (S205; 1130), the time prediction system (3; 1115) calculates (S201) the requested predicted core times of presence (7) of the recipient at the postal address (1) using the locations (5) received from the mobile device and the postal address (1); and

1.5.1 provides (8; 1135) the requested predicted core times of presence (7) of the recipient (1205) to the entity;

1.5.2 thereby supporting the entity (1105) to deliver the service to the recipient (1205) at the postal address (1) at the predicted core times of presence (7) of the recipient at the postal address.

2. Method for reducing energy consumption for the delivery of a service to a recipient (1205) of the service at a postal address (1), the method comprising the following steps:

2.1 a time prediction system (3; 1115) receives (S102; 1112) in regular temporal intervals from a mobile device (22; 1110) of the recipient at least

2.1.1 an identification code (2) corresponding to the recipient and

2.1.2 data representing a location (5) of the mobile device (22; 1110);

2.1.3 wherein the data representing the location (5) of the mobile device (22; 1110) of the recipient (1205) are transformed on the mobile device of the recipient before sending them to the time prediction system (3; 1115) in such a way,

2.1.3.1 that location of the mobile device cannot be localized on the earth by the time prediction system,

2.1.3.2 but the transformed location data allow the time prediction system (3; 1115) to measure distances between different locations of the mobile device within a predefined distance range; and in that

2.1.4 the postal address (1) to which the service is to be delivered is transformed in the same way;

2.2 the time prediction system stores

2.2.1 the data representing the location (5) together with

2.2.2 the identification code (2) of the recipient and

2.2.3 a time stamp;

2.3 the time prediction system (3; 1115) receives a request for providing predicted core times of presence (7) of the recipient at the postal address (1) from an entity;

2.4 the request (S205; 1130) containing at least

2.4.1 the postal address (1) and

2.4.2 the identification code (2) corresponding to the recipient (1205);

2.5 after receiving the request (S205; 1130), the time prediction system provides (8; 1135) the requested predicted core times of presence (7) to the entity;

2.5.1 thereby putting the entity (1105) in a position to deliver the service to the recipient at the postal address (1) at the predicted core times of presence (7) of the recipient at the postal address.

3. A system for reducing energy consumption for the delivery of a service to a recipient (1205) of the service at a postal address (1), the system comprising:

3.1 a time prediction system (1115),
3.2 a mobile device (1110), and
3.3 an entity (1105);
3.4 wherein the time prediction system (1115), the mobile device (1110), and the entity (1105) are configured in such a way that the system is adapted to carry out the method of claim 1 or claim 2.

4. A combination of

4.1 a computer program for a time prediction system (3; 1115),
4.2 a computer program for a mobile device (22; 1110), and
4.3 a computer program for an entity (1105);
4.4 wherein each of the computer programs comprises respective instructions which, when each respective program is respectively executed by the time prediction system (3; 1115), the mobile device (22; 1110) and the entity (1105), cause the system of claim 3 to perform the method of claim 1 or claim 2.

5. At least one computer-readable medium having stored thereon the computer program for the time prediction system (3; 1115), the computer program for the mobile device (22; 1110) and the computer program for the entity (1105) according to the immediately preceding claim.

6. A method performed by an entity (1105) involved in delivery of a service to a recipient (1205) at a postal address (1), the method including the following steps:

6.1 the entity (1105) receives an order to deliver the service to the recipient (1205) at the postal address (1);
6.1.1 the order (1230) including at least
6.1.1.1 the postal address (1) and
6.1.1.2 the recipient's name;
6.1.2 the entity further receives an identification code (2) corresponding to the recipient or calculates the identification code (2) corresponding to the recipient based on information about the recipient;
6.2 after receiving the order (1230), the entity sends a request (S205; 1130) to a time prediction system (3; 1115) for receiving from the time prediction system predicted core times of presence (7) of the recipient at the postal address (1);
6.2.1 the request containing at least
6.2.1.1 the postal address (1) and
6.2.1.2 the identification code (2) corresponding to the recipient (1205);
6.2.2 wherein the postal address (1) is transformed by the entity (1105) before sending it to the time prediction system (3; 1115) in such a way
6.2.2.1 that the postal address (1) cannot be localized on the earth by the time prediction system (3; 1115),
6.2.2.2 but the transformed postal address (1) allows the time prediction system (3; 1115) to measure distances between different locations of a mobile device (22; 1110) and the postal address (1) within a predefined distance range; 6.3 after sending the request (S205; 1130), the entity receives (8; 1135) from the time prediction system the requested predicted core times of presence (7) of the recipient;
6.3.1 thereby putting the entity (1105) in a position to deliver the service to the recipient at the postal address (1) at the predicted core times of presence (7) of the recipient at the postal address.

7. The method according to any of the preceding method claims, **characterised in that**

7.1 the transformation of the data representing the location of the mobile device is performed by using a method chosen from a group comprising at least the following:
7.2 Geohashing the location data and deleting a suitable number of leading digits of the Geohash code, preferably the first three digits; and
7.3 deleting a suitable number of leading digits of the geographical coordinates of the location, preferably deleting the integer geographical degrees and preserving the geographical minutes and seconds.

8. The method according to any of the preceding method claims, **characterised in that**

8.1 the identification code (2) corresponding to the recipient (1205) is established in such a way, that the time prediction system (3; 1115) cannot reconstruct the name and postal address (1) of the recipient;

8.2 preferably the identification code (2) is generated from the data identifying the recipient in such a way, that the data identifying the recipient (1205) cannot be reconstructed from the identification code, preferably by hashing the data identifying the recipient, preferably by hashing the email address of the recipient.

9. The method according to any of the preceding method claims,
**characterised in that**

9.1 a group of mobile devices of a corresponding group of recipients send at least
9.1.1 an identification code (2) corresponding to the individual recipient or an identification code common to all recipients from the group of recipients and
9.1.2 data representing a location of the mobile device of the individual recipient
9.1.3 in regular temporal intervals to the time prediction system;
9.2 wherein the time prediction system calculates the predicted core times of presence (7) of any recipient from the group of recipients at the postal address (1).

10. The method according to any of the preceding method claims,
**characterised in that**

10.1 the time prediction system (3; 1115) calculates the probability of the mobile device (22; 1110) being within a predefined distance to the postal address (1) at a given time; and **in that**
10.2 the predicted core times of presence (7) of the recipient (1205) at the postal address (1) are derived by comparing the calculated probability with a predetermined threshold probability.

11. The method according to the immediately preceding claim,
**characterised in that**
the prediction of the core times of presence (7) is carried out using a Machine Learning or Deep Learning approach, preferably using a Recurrent Neural Network model, or a Long Short-Term Memory (LSTM) model such as a Periodic LSTM with Weather-Aware Gating Mechanisms or a Transformer-based model.

12. Method (100) according to claim 10 or 11,
**further comprising**

12.1 providing additional information (15) to the time prediction system (3; 1115), preferably weather data; and
12.2 the time prediction system calculating the predicted core times of presence (7) of the recipient (1205) at the postal address (1) as a function of the additional information.

13. The method according to any of the preceding method claims,
**further comprising any of the following steps:**

13.1 using an authentication code to verify whether the mobile device is authorised to transfer data representing a location to the time prediction system;
13.2 sending the data representing the location from the mobile device to the time prediction system using a proxy server;
13.3 generating an event token used to authorize requesting predicted core times of presence (7) of the recipient at the postal address (1) from the time prediction system for this delivery event, and invalidating (S208) the event token after successful delivery of the service to the recipient at the postal address (1).

14. The method according to any of the preceding method claims,
**further comprising any of the following steps:**

14.1 checking the actual presence of the recipient (1205) at the postal address (1) immediately before delivery of the service to the recipient at the postal address, wherein the checking is performed by sending a corresponding request from the entity (1105) to the time prediction system (3; 1115);
14.2 monitoring in the time prediction system the distance between the transformed location of the mobile device and the transformed postal address (1); determining whether the mobile device is at the transformed postal address (1) or can reach the transformed postal address (1) in time for the predicted core times of presence; and updating the predicted core times of presence in case the mobile device is unlikely to be at the transformed postal address (1) during the predicted core times of presence.

**Patentansprüche**

1. Verfahren zur Reduzierung des Energieverbrauchs für das Erbringen einer Dienstleistung für einen Empfänger (1205) der Dienstleistung an einer Postanschrift (1), wobei das Verfahren die folgenden Schritte umfasst:

   1.1 ein mobiles Gerät (22; 1110) des Empfängers sendet (S102; 1112) mindestens
   1.1.1 einen dem Empfänger (1205) entsprechenden Identifikationscode (2) und
   1.1.2 Daten, die einen Standort (5) des mobilen Geräts (22; 1110) darstellen
   1.1.3 in regelmäßigen Zeitintervallen an ein Zeitvorhersagesystem (3; 1115);
   1.1.4 wobei die Daten, die den Standort (5) des mobilen Geräts (22; 1110) des Empfängers (1205) darstellen, auf dem mobilen Gerät des Empfängers vor dem Senden an das Zeitvorhersagesystem (3; 1115) derart transformiert werden,
   1.1.4.1 dass der Standort des mobilen Geräts vom Zeitvorhersagesystem nicht auf der Erde lokalisiert werden kann,
   1.1.4.2 die transformierten Standortdaten es dem Zeitvorhersagesystem (3; 1115) jedoch ermöglichen, Entfernungen zwischen verschiedenen Standorten des mobilen Geräts innerhalb eines vordefinierten Entfernungsbereichs zu messen; und dass
   1.1.5 die Postanschrift (1), an der die Dienstleistung erbracht werden soll, auf die gleiche Weise transformiert wird;
   1.2 das Zeitvorhersagesystem (3; 1115) empfängt und speichert die Daten, die den Standort (5) darstellen, und speichert sie zusammen mit dem Identifikationscode (2) des Empfängers (1205) und einem Zeitstempel;
   1.3 eine Entität (1105) erhält eine Bestellung (1230), die Dienstleistung an den Empfänger (1205) an die Postanschrift (1) zu liefern;
   1.3.1 wobei die Bestellung (1230) mindestens
   1.3.1.1 die Postanschrift (1) und
   1.3.1.2 Daten zur Identifizierung des Empfängers enthält;
   1.3.2 die Entität (1105) erhält außerdem den Identifikationscode (2) des Empfängers (1205) oder berechnet den Identifikationscode des Empfängers auf der Grundlage der Daten zur Identifizierung des Empfängers;
   1.4 nach Erhalt der Bestellung (1230) sendet die Entität (1105) eine Anfrage (S205; 1130) an das Zeitvorhersagesystem (3; 1115), der Entität vorhergesagte Kernzeiten der Anwesenheit (7) des Empfängers (1205) an der Postanschrift (1) mitzuteilen;
   1.4.1 wobei die Anfrage (S205; 1130) mindestens
   1.4.1.1 die Postanschrift (1) und
   1.4.1.2 den Identifikationscode (2) des Empfängers (1205) enthält;
   1.5 nach Erhalt der Anfrage (S205; 1130) berechnet (S201) das Zeitvorhersagesystem (3; 1115) die angeforderten vorhergesagten Kernzeiten der Anwesenheit (7) des Empfängers an der Postanschrift (1) unter Verwendung der vom Mobilgerät empfangenen Standorte (5) und der Postanschrift (1); und
   1.5.1 stellt (8; 1135) die angeforderten vorhergesagten Kernzeiten der Anwesenheit (7) des Empfängers (1205) der Entität zur Verfügung;
   1.5.2 wodurch die Entität (1105) dabei unterstützt wird, die Dienstleistung an den Empfänger (1205) an der Postanschrift (1) zu den vorhergesagten Kernzeiten der Anwesenheit (7) des Empfängers an der Postanschrift zu erbringen.

2. Verfahren zur Reduzierung des Energieverbrauchs für das Erbringen einer Dienstleistung für einen Empfänger (1205) der Dienstleistung an einer Postanschrift (1), wobei das Verfahren die folgenden Schritte umfasst:

   2.1 ein Zeitvorhersagesystem (3; 1115) empfängt (S102; 1112) in regelmäßigen Zeitintervallen von einem mobilen Gerät (22; 1110) des Empfängers mindestens
   2.1.1 einen dem Empfänger entsprechenden Identifikationscode (2) und
   2.1.2 Daten, die einen Standort (5) des mobilen Geräts (22; 1110) darstellen;
   2.1.3 wobei die Daten, die den Standort (5) des mobilen Geräts (22; 1110) des Empfängers (1205) darstellen, auf dem mobilen Gerät des Empfängers vor dem Senden an das Zeitvorhersagesystem (3; 1115) derart transformiert werden,
   2.1.3.1 dass der Standort des mobilen Geräts vom Zeitvorhersagesystem nicht auf der Erde lokalisiert werden kann,

2.1.3.2 die transformierten Standortdaten es dem Zeitvorhersagesystem (3; 1115) jedoch ermöglichen, Entfernungen zwischen verschiedenen Standorten des mobilen Geräts innerhalb eines vordefinierten Entfernungsbereichs zu messen; und dass

2.1.4 die Postanschrift (1), an der die Dienstleistung erbracht werden soll, auf die gleiche Weise transformiert wird;

2.2 das Zeitvorhersagesystem speichert

2.2.1 die Daten, die den Standort (5) darstellen, zusammen mit

2.2.2 dem Identifikationscode (2) des Empfängers und

2.2.3 einem Zeitstempel;

2.3 das Zeitvorhersagesystem (3; 1115) empfängt von einer Entität eine Anfrage zur Bereitstellung von vorhergesagten Kernzeiten der Anwesenheit (7) des Empfängers an der Postanschrift (1);

2.4 wobei die Anfrage (S205; 1130) mindestens

2.4.1 die Postanschrift (1) und

2.4.2 den Identifikationscode (2) des Empfängers (1205) enthält;

2.5 nach Erhalt der Anfrage (S205; 1130) liefert das Zeitvorhersagesystem (8; 1135) die angeforderten vorhergesagten Kernzeiten der Anwesenheit (7) an die Entität.

2.5.1 wodurch die Entität (1105) in die Lage versetzt wird, die Dienstleistung an den Empfänger an der Postanschrift (1) zu den vorhergesagten Kernzeiten der Anwesenheit (7) des Empfängers an der Postanschrift zu erbringen.

3. System zur Reduzierung des Energieverbrauchs für das Erbringen einer Dienstleistung für einen Empfänger (1205) der Dienstleistung an einer Postanschrift (1), das System umfassend:

3.1 ein Zeitvorhersagesystem (1115),

3.2 ein mobiles Gerät (1110) und

3.3 eine Entität (1105);

3.4 wobei das Zeitvorhersagesystem (1115), das mobile Gerät (1110) und die Einheit (1105) so konfiguriert sind, dass das System zur Durchführung des Verfahrens nach Anspruch 1 oder Anspruch 2 geeignet ist.

4. Eine Kombination aus

4.1 einem Computerprogramm für ein Zeitvorhersagesystem (3; 1115),

4.2 einem Computerprogramm für ein mobiles Gerät (22; 1110) und

4.3 einem Computerprogramm für eine Entität (1105);

4.4 wobei jedes der Computerprogramme jeweilige Anweisungen umfasst, die, wenn jedes jeweilige Programm jeweils vom Zeitvorhersagesystem (3; 1115), dem mobilen Gerät (22; 1110) und der Entität (1105) ausgeführt wird, das System nach Anspruch 3 veranlassen, das Verfahren nach Anspruch 1 oder Anspruch 2 auszuführen.

5. Mindestens ein computerlesbares Medium, auf dem das Computerprogramm für das Zeitvorhersagesystem (3; 1115), das Computerprogramm für das mobile Gerät (22; 1110) und das Computerprogramm für die Entität (1105) nach dem unmittelbar vorangehenden Anspruch gespeichert sind.

6. Verfahren, das von einer Einheit (1105) ausgeführt wird, die an der Erbringung einer Dienstleistung für einen Empfänger (1205) an einer Postanschrift (1) beteiligt ist, wobei das Verfahren die folgenden Schritte umfasst:

6.1 die Entität (1105) erhält einen Auftrag, die Dienstleistung für den Empfänger (1205) an der Postanschrift (1) zu erbringen;

6.1.1 wobei der Auftrag (1230) mindestens

6.1.1.1 die Postanschrift (1) und

6.1.1.2 den Namen des Empfängers umfasst;

6.1.2 die Entität empfängt ferner einen dem Empfänger entsprechenden Identifikationscode (2) oder berechnet den dem Empfänger entsprechenden Identifikationscode (2) auf der Grundlage von Informationen über den Empfänger;

6.2 nach Erhalt der Bestellung (1230) sendet die Entität eine Anfrage (S205; 1130) an ein Zeitvorhersagesystem (3; 1115), um vom Zeitvorhersagesystem vorhergesagte Kernzeiten der Anwesenheit (7) des Empfängers an der Postanschrift (1) zu erhalten;

6.2.1 wobei die Anfrage mindestens

6.2.1.1 die Postanschrift (1) und

6.2.1.2 den dem Empfänger entsprechenden Identifikationscode (2) (1205) enthält;

6.2.2 wobei die Postanschrift (1) von der Entität (1105) vor dem Senden an das Zeitvorhersagesystem (3; 1115) derart umgewandelt wird,

6.2.2.1 dass die Postanschrift (1) vom Zeitvorhersagesystem (3; 1115) nicht auf der Erde lokalisiert werden kann,

6.2.2.2 die transformierte Postanschrift (1) es dem Zeitvorhersagesystem (3; 1115) jedoch ermöglicht, Entfernungen zwischen verschiedenen Standorten eines mobilen Geräts (22; 1110) und der Postanschrift (1) innerhalb eines vordefinierten Entfernungsbereichs zu messen; 6.3 nach dem Senden der Anfrage (S205; 1130) empfängt die Entität (8; 1135) vom Zeitvorhersagesystem die angeforderten vorhergesagten Kernzeiten der Anwesenheit (7) des Empfängers;

6.3.1 wodurch die Entität (1105) in die Lage versetzt wird, die Dienstleistung an den Empfänger an der Postanschrift (1) zu den vorhergesagten Kernzeiten der Anwesenheit (7) des Empfängers an der Postanschrift zu erbringen.

**7.** Verfahren nach einem der vorstehenden Verfahrensansprüche,
**dadurch gekennzeichnet, dass**
7.1 die Transformation der Daten, die den Standort des mobilen Geräts darstellen, unter Verwendung eines Verfahrens durchgeführt wird, das aus einer Gruppe ausgewählt ist, die mindestens Folgendes umfasst:

7.2 Geohashing der Standortdaten und Löschen einer geeigneten Anzahl von führenden Ziffern des Geohash-Codes, vorzugsweise der ersten drei Ziffern; und

7.3 Löschen einer geeigneten Anzahl von führenden Ziffern der geografischen Koordinaten des Standorts, vorzugsweise Löschen der ganzzahligen geografischen Gradzahlen und Beibehalten der geografischen Minuten und Sekunden.

**8.** Verfahren nach einem der vorstehenden Verfahrensansprüche,
**dadurch gekennzeichnet, dass**

8.1 der dem Empfänger (1205) entsprechende Identifikationscode (2) derart festgelegt wird, dass das Zeitvorhersagesystem (3; 1115) den Namen und die Postanschrift (1) des Empfängers nicht rekonstruieren kann;

8.2 vorzugsweise der Identifikationscode (2) aus den Daten, die den Empfänger identifizieren, derart generiert wird, dass die Daten, die den Empfänger (1205) identifizieren, nicht aus dem Identifikationscode rekonstruiert werden können, vorzugsweise durch Hashing der Daten, die den Empfänger identifizieren, vorzugsweise durch Hashing der E-Mail-Adresse des Empfängers.

**9.** Verfahren nach einem der vorstehenden Verfahrensansprüche,
**dadurch gekennzeichnet, dass**

9.1 eine Gruppe von Mobilgeräten einer entsprechenden Gruppe von Empfängern mindestens

9.1.1 einen Identifikationscode (2), der dem einzelnen Empfänger entspricht, oder einen Identifikationscode, der allen Empfängern aus der Gruppe von Empfängern gemeinsam ist, und

9.1.2 Daten, die einen Standort des Mobilgeräts des einzelnen Empfängers darstellen,

9.1.3 in regelmäßigen Zeitintervallen an das Zeitvorhersagesystem sendet;

9.2 wobei das Zeitvorhersagesystem die vorhergesagten Kernzeiten der Anwesenheit (7) eines beliebigen Empfängers aus der Gruppe von Empfängern an der Postanschrift (1) berechnet.

**10.** Verfahren nach einem der vorstehenden Verfahrensansprüche,
**dadurch gekennzeichnet, dass**

10.1 das Zeitvorhersagesystem (3; 1115) die Wahrscheinlichkeit berechnet, dass sich das mobile Gerät (22; 1110) zu einem bestimmten Zeitpunkt innerhalb einer vordefinierten Entfernung zur Postanschrift (1) befindet; und dass

10.2 die vorhergesagten Kernzeiten der Anwesenheit (7) des Empfängers (1205) an der Postanschrift (1) durch Vergleichen der berechneten Wahrscheinlichkeit mit einer vorbestimmten Schwellenwahrscheinlichkeit abgeleitet werden.

**11.** Verfahren nach dem unmittelbar vorhergehenden Anspruch,
**dadurch gekennzeichnet, dass**
die Vorhersage der Kernzeiten der Anwesenheit (7) unter Verwendung eines maschinellen Lernens oder eines Deep-Learning-Ansatzes durchgeführt wird, vorzugsweise unter Verwendung eines rekurrenten neuronalen Netzmodells oder eines Long-Short-Term-Memory-Modells (LSTM), wie beispielsweise eines periodischen LSTM mit wetterbewussten Gating-Mechanismen oder eines Transformer-basierten Modells.

**12.** Verfahren (100) nach Anspruch 10 oder 11,
**ferner umfassend**

12.1 das Bereitstellen zusätzlicher Informationen (15) für das Zeitvorhersagesystem (3; 1115), vorzugsweise Wetterdaten; und

12.2 berechnen der vorhergesagten Kernzeiten der Anwesenheit (7) des Empfängers (1205) an der Postadresse (1) als Funktion der zusätzlichen Informationen durch das Zeitvorhersagesystem.

**13.** Verfahren nach einem der vorstehenden Verfahrensansprüche,
**ferner irgendeinen der folgenden Schritte umfassend:**

13.1 Verwenden eines Authentifizierungscodes, um zu überprüfen, ob das mobile Gerät berechtigt ist, Daten, die einen Standort darstellen, an das Zeitvorhersagesystem zu übertragen;

13.2 Senden der Daten, die den Standort darstellen, vom mobilen Gerät an das Zeitvorhersagesystem unter Verwendung eines Proxy-Servers;

13.3 Erzeugen eines Ereignistokens, das verwendet wird, um die Anforderung von vorhergesagten Kernzeiten der Anwesenheit (7) des Empfängers an der Postanschrift (1) vom Zeitvorhersagesystem für dieses Erbringungsereignis zu autorisieren, und Entwerten (S208) des Ereignistokens nach erfolgreichem Erbringen der Dienstleistung an den Empfänger an der Postanschrift (1).

**14.** Verfahren nach einem der vorstehenden Verfahrensansprüche,
**ferner irgendeinen der folgenden Schritte umfassend:**

14.1 Überprüfen der tatsächlichen Anwesenheit des Empfängers (1205) an der Postanschrift (1) unmittelbar vor dem Erbringen der Dienstleistung an den Empfänger an der Postanschrift, wobei die Überprüfung durch Senden einer entsprechenden Anfrage von der Entität (1105) an das Zeitvorhersagesystem (3; 1115) durchgeführt wird;

14.2 Überwachen der Entfernung zwischen dem transformierten Standort des Mobilgeräts und der transformierten Postanschrift (1) im Zeitvorhersagesystem; Bestimmen, ob sich das Mobilgerät an der transformierten Postanschrift (1) befindet oder die transformierte Postanschrift (1) rechtzeitig zu den vorhergesagten Kernzeiten der Anwesenheit erreichen kann; und Aktualisieren der vorhergesagten Kernzeiten der Anwesenheit, falls es unwahrscheinlich ist, dass sich das Mobilgerät während der vorhergesagten Kernzeiten der Anwesenheit an der transformierten Postanschrift (1) befindet.

**Revendications**

**1.** Procédé de réduction de la consommation d'énergie liée à la fourniture d'un service à un destinataire (1205) du service à une adresse postale (1), le procédé comprenant les étapes suivantes :

1.1 un dispositif mobile (22 ; 1110) du destinataire envoie (S102 ; 1112) au moins

1.1.1 un code d'identification (2) correspondant au destinataire (1205) et

1.1.2 des données représentant une position (5) du dispositif mobile (22 ; 1110)

1.1.3 à intervalles temporels réguliers à un système de prédiction temporelle (3 ; 1115) ;

1.1.4 dans lequel les données représentant la position (5) du dispositif mobile (22 ; 1110) du destinataire (1205) sont transformées sur le dispositif mobile du destinataire avant leur envoi au système de prédiction temporelle (3 ; 1115), de telle manière

1.1.4.1 que la position du dispositif mobile ne puisse pas être localisée sur la Terre par le système de prédiction temporelle,

1.1.4.2 mais que les données de position transformées permettent au système de prédiction temporelle (3 ; 1115) de mesurer des distances entre différentes positions du dispositif mobile à l'intérieur d'une plage de distance prédéfinie ; et en ce que

1.1.5 l'adresse postale (1) à laquelle le service doit être fourni est transformée de la même manière ;

1.2 le système de prédiction temporelle (3 ; 1115) reçoit et stocke les données représentant la position (5) et les stocke conjointement avec le code d'identification (2) du destinataire (1205) et un horodatage ;

1.3 une entité (1105) reçoit une commande (1230) visant à fournir le service au destinataire (1205) à l'adresse postale (1) ;

1.3.1 la commande (1230) comprenant au moins

1.3.1.1 l'adresse postale (1) et

1.3.1.2 des données identifiant le destinataire ;

1.3.2 l'entité (1105) reçoit en outre le code d'identification (2) du destinataire (1205) ou calcule le code d'identification du destinataire à partir des données identifiant le destinataire ;

1.4 après réception de la commande (1230), l'entité (1105) envoie une requête (S205 ; 1130) au système de prédiction temporelle (3 ; 1115) pour la fourniture à l'entité de plages horaires centrales de présence prédites (7) du destinataire (1205) à l'adresse postale (1) ;

1.4.1 la requête (S205 ; 1130) contenant au moins

1.4.1.1 l'adresse postale (1) et

1.4.1.2 le code d'identification (2) correspondant au destinataire (1205) ;

1.5 après réception de la requête (S205 ; 1130), le système de prédiction temporelle (3 ; 1115) calcule (S201) les plages horaires centrales de présence prédites demandées (7) du destinataire à l'adresse postale (1) en utilisant les positions (5) reçues du dispositif mobile et l'adresse postale (1) ; et

1.5.1 fournit (8 ; 1135) les plages horaires centrales de présence prédites demandées (7) du destinataire (1205) à l'entité ;

1.5.2 aidant ainsi l'entité (1105) à fournir le service au destinataire (1205) à l'adresse postale (1) pendant les plages horaires centrales de présence prédites (7) du destinataire à l'adresse postale.

2. Procédé de réduction de la consommation d'énergie liée à la fourniture d'un service à un destinataire (1205) du service à une adresse postale (1), le procédé comprenant les étapes suivantes :

2.1 un système de prédiction temporelle (3 ; 1115) reçoit (S102 ; 1112), à intervalles temporels réguliers, d'un dispositif mobile (22 ; 1110) du destinataire au moins

2.1.1 un code d'identification (2) correspondant au destinataire et

2.1.2 des données représentant une position (5) du dispositif mobile (22 ; 1110) ;

2.1.3 dans lequel les données représentant la position (5) du dispositif mobile (22 ; 1110) du destinataire (1205) sont transformées sur le dispositif mobile du destinataire avant leur envoi au système de prédiction temporelle (3 ; 1115), de telle manière

2.1.3.1 que la position du dispositif mobile ne puisse pas être localisée sur la Terre par le système de prédiction temporelle,

2.1.3.2 mais que les données de position transformées permettent au système de prédiction temporelle (3 ; 1115) de mesurer des distances entre différentes positions du dispositif mobile à l'intérieur d'une plage de distance prédéfinie ; et en ce que

2.1.4 l'adresse postale (1) à laquelle le service doit être fourni est transformée de la même manière ;

2.2 le système de prédiction temporelle stocke

2.2.1 les données représentant la position (5) conjointement avec

2.2.2 le code d'identification (2) du destinataire et

2.2.3 un horodatage ;

2.3 le système de prédiction temporelle (3 ; 1115) reçoit d'une entité une requête en vue de fournir des plages horaires centrales de présence prédites (7) du destinataire à l'adresse postale (1) ;

2.4 la requête (S205 ; 1130) contenant au moins

2.4.1 l'adresse postale (1) et

2.4.2 le code d'identification (2) correspondant au destinataire (1205) ;

2.5 après réception de la requête (S205 ; 1130), le système de prédiction temporelle fournit (8 ; 1135) les plages horaires centrales de présence prédites demandées (7) à l'entité ;

2.5.1 mettant ainsi l'entité (1105) en mesure de fournir le service au destinataire à l'adresse postale (1) pendant les plages horaires centrales de présence prédites (7) du destinataire à l'adresse postale.

3. Système destiné à réduire la consommation d'énergie liée à la fourniture d'un service à un destinataire (1205) du service à une adresse postale (1), le système comprenant :

3.1 un système de prédiction temporelle (1115),

3.2 un dispositif mobile (1110), et

3.3 une entité (1105) ;

3.4 dans lequel le système de prédiction temporelle (1115), le dispositif mobile (1110) et l'entité (1105) sont configurés de telle manière que le système est adapté pour mettre en œuvre le procédé selon la revendication 1 ou la revendication 2.

4. Combinaison de

4.1 un programme d'ordinateur pour un système de prédiction temporelle (3 ; 1115),
4.2 un programme d'ordinateur pour un dispositif mobile (22 ; 1110), et
4.3 un programme d'ordinateur pour une entité (1105) ;
4.4 dans laquelle chacun des programmes d'ordinateur comprend des instructions respectives qui, lorsque chaque programme respectif est respectivement exécuté par le système de prédiction temporelle (3 ; 1115), le dispositif mobile (22 ; 1110) et l'entité (1105), amènent le système selon la revendication 3 à mettre en œuvre le procédé selon la revendication 1 ou la revendication 2.

5. Au moins un support lisible par ordinateur sur lequel sont stockés le programme d'ordinateur pour le système de prédiction temporelle (3 ; 1115), le programme d'ordinateur pour le dispositif mobile (22 ; 1110) et le programme d'ordinateur pour l'entité (1105) selon la revendication immédiatement précédente.

6. Procédé mis en œuvre par une entité (1105) impliquée dans la fourniture d'un service à un destinataire (1205) à une adresse postale (1), le procédé comprenant les étapes suivantes

6.1 l'entité (1105) reçoit une commande visant à fournir le service au destinataire (1205) à l'adresse postale (1) ;
6.1.1 la commande (1230) comprenant au moins
6.1.1.1 l'adresse postale (1) et
6.1.1.2 le nom du destinataire ;
6.1.2 l'entité reçoit en outre un code d'identification (2) correspondant au destinataire ou calcule le code d'identification (2) correspondant au destinataire à partir d'informations concernant le destinataire ;
6.2 après réception de la commande (1230), l'entité envoie une requête (S205 ; 1130) à un système de prédiction temporelle (3 ; 1115) afin de recevoir du système de prédiction temporelle des plages horaires centrales de présence prédites (7) du destinataire à l'adresse postale (1) ;
6.2.1 la requête contenant au moins
6.2.1.1 l'adresse postale (1) et
6.2.1.2 le code d'identification (2) correspondant au destinataire (1205) ;
6.2.2 dans lequel l'adresse postale (1) est transformée par l'entité (1105) avant son envoi au système de prédiction temporelle (3 ; 1115), de telle manière
6.2.2.1 que l'adresse postale (1) ne puisse pas être localisée sur la Terre par le système de prédiction temporelle (3 ; 1115),
6.2.2.2 mais que l'adresse postale transformée (1) permette au système de prédiction temporelle (3 ; 1115) de mesurer des distances entre différentes positions d'un dispositif mobile (22 ; 1110) et l'adresse postale (1) à l'intérieur d'une plage de distance prédéfinie ;
6.3 après envoi de la requête (S205 ; 1130), l'entité reçoit (8 ; 1135) du système de prédiction temporelle les plages horaires centrales de présence prédites demandées (7) du destinataire ;
6.3.1 mettant ainsi l'entité (1105) en mesure de fournir le service au destinataire à l'adresse postale (1) pendant les plages horaires centrales de présence prédites (7) du destinataire à l'adresse postale.

7. Procédé selon l'une quelconque des revendications de procédé précédentes, **caractérisé en ce que**
7.1 la transformation des données représentant la position du dispositif mobile est effectuée au moyen d'un procédé choisi dans un groupe comprenant au moins les procédés suivants :

7.2 géohachage des données de position et suppression d'un nombre approprié de premiers chiffres du code Geohash, de préférence les trois premiers chiffres ; et
7.3 suppression d'un nombre approprié de premiers chiffres des coordonnées géographiques de la position, de préférence suppression des degrés géographiques entiers et conservation des minutes et secondes géographiques.

8. Procédé selon l'une quelconque des revendications de procédé précédentes, **caractérisé en ce que**

8.1 le code d'identification (2) correspondant au destinataire (1205) est établi de telle manière que le système de prédiction temporelle (3 ; 1115) ne puisse pas reconstituer le nom et l'adresse postale (1) du destinataire ;

8.2 de préférence, le code d'identification (2) est généré à partir des données identifiant le destinataire de telle manière que les données identifiant le destinataire (1205) ne puissent pas être reconstituées à partir du code d'identification, de préférence par hachage des données identifiant le destinataire, de préférence par hachage de l'adresse électronique du destinataire.

9. Procédé selon l'une quelconque des revendications de procédé précédentes, **caractérisé en ce que**

9.1 les dispositifs mobiles d'un groupe de dispositifs mobiles d'un groupe correspondant de destinataires envoient au moins

9.1.1 un code d'identification (2) correspondant au destinataire individuel ou un code d'identification commun à tous les destinataires du groupe de destinataires et

9.1.2 des données représentant une position du dispositif mobile du destinataire individuel

9.1.3 à intervalles temporels réguliers au système de prédiction temporelle ;

9.2 dans lequel le système de prédiction temporelle calcule les plages horaires centrales de présence prédites (7) d'un destinataire quelconque du groupe de destinataires à l'adresse postale (1).

10. Procédé selon l'une quelconque des revendications de procédé précédentes, **caractérisé en ce que**

10.1 le système de prédiction temporelle (3 ; 1115) calcule la probabilité que le dispositif mobile (22 ; 1110) se trouve à l'intérieur d'une distance prédéfinie par rapport à l'adresse postale (1) à un instant donné ; et **en ce que**

10.2 les plages horaires centrales de présence prédites (7) du destinataire (1205) à l'adresse postale (1) sont dérivées par comparaison de la probabilité calculée avec une probabilité seuil prédéterminée.

11. Procédé selon la revendication immédiatement précédente, **caractérisé en ce que**

la prédiction des plages horaires centrales de présence (7) est effectuée au moyen d'une approche d'apprentissage automatique ou d'apprentissage profond, de préférence au moyen d'un modèle de réseau neuronal récurrent, ou d'un modèle à mémoire longue à court terme (LSTM), tel qu'un LSTM périodique doté de mécanismes de portes tenant compte des conditions météorologiques, ou d'un modèle de type Transformer.

12. Procédé (100) selon la revendication 10 ou 11, comprenant en outre

12.1 la fourniture d'informations supplémentaires (15) au système de prédiction temporelle (3 ; 1115), de préférence des données météorologiques ; et

12.2 le calcul, par le système de prédiction temporelle, des plages horaires centrales de présence prédites (7) du destinataire (1205) à l'adresse postale (1) en fonction des informations supplémentaires.

13. Procédé selon l'une quelconque des revendications de procédé précédentes, comprenant en outre une ou plusieurs des étapes suivantes :

13.1 utilisation d'un code d'authentification pour vérifier si le dispositif mobile est autorisé à transférer des données représentant une position au système de prédiction temporelle ;

13.2 envoi des données représentant la position depuis le dispositif mobile vers le système de prédiction temporelle au moyen d'un serveur mandataire ;

13.3 génération d'un jeton d'événement utilisé pour autoriser la demande de plages horaires centrales de présence prédites (7) du destinataire à l'adresse postale (1) auprès du système de prédiction temporelle pour cet événement de fourniture, et invalidation (S208) du jeton d'événement après fourniture réussie du service au destinataire à l'adresse postale (1).

14. Procédé selon l'une quelconque des revendications de procédé précédentes, comprenant en outre une ou plusieurs des étapes suivantes :

14.1 vérification de la présence réelle du destinataire (1205) à l'adresse postale (1) immédiatement avant la fourniture du service au destinataire à l'adresse postale, la vérification étant effectuée par l'envoi d'une requête correspondante depuis l'entité (1105) vers le système de prédiction temporelle (3 ; 1115) ;

14.2 surveillance, dans le système de prédiction temporelle, de la distance entre la position transformée du dispositif mobile et l'adresse postale transformée (1) ; détermination du fait de savoir si le dispositif mobile se trouve à l'adresse postale transformée (1) ou peut atteindre l'adresse postale transformée (1) à temps pour les plages horaires centrales de présence prédites ; et mise à jour des plages horaires centrales de présence prédites dans le cas où il est peu probable que le dispositif mobile se trouve à l'adresse postale transformée (1) pendant les plages horaires centrales de présence prédites.

100

S101

Forwarding address
info data

S102

Forwarding location
info data

S103

Authentication

S104

Processing

S105

Converting

**FIG. 1**

FIG. 2

FIG. 3

200

S201 Calculating core times

S202 Generating event

S203 Forwarding request

S207 Authenticating and hashing

S204 Creating event token

S205 Sending information request

S206 Validity event token

S208 Deleting event token

FIG. 4

FIG. 5

## Post Position API

**FIG. 6**

## Event API

**FIG. 7**

# CoreTimes API

**FIG. 8**

FIG. 9A

FIG. 9B

FIG. 9C

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200349510 A1

- US 20190260730 A1